# EUROPÄISCHE PATENTANMELDUNG

(11) **EP 4 826 242 A1**
(43) Veröffentlichungstag der Anmeldung: **21.10.2026**
(21) Anmeldenummer: 25171012.5
(22) Anmeldetag: 16.04.2025
(51) Int. Cl.: F03D 1/06

(54) **VERFAHREN ZUM ANORDNEN VON VORTEXGENERATORELEMENTEN AN EINEM ROTORBLATT FÜR EINE WINDENERGIEANLAGE, ROTORBLATT, WINDENERGIEANLAGE UND WINDPARK**

(71) Anmelder: Wobben Properties GmbH, 26607 Aurich (DE)
(72) Erfinder: Stemberg, Jochen, 26607 Aurich (DE)
(74) Vertreter: Eisenführ Speiser

(57) **Zusammenfassung**

Die vorliegende Erfindung betrifft ein Verfahren zum Anordnen von Vortexgeneratorelementen an einem Rotorblatt für eine Windenergieanlage, ein Rotorblatt, eine Windenergieanlage und einen Windpark. Die Erfindung bezieht sich dabei auf einen Unterschied zwischen dem Maximum einer Druckverteilungskurve eines aufwärts gerichteten Teils einer aerodynamischen Polare und dem Maximum einer Druckverteilungskurve eines abwärts gerichteten Teils der aerodynamischen Polare.

## Beschreibung

Die vorliegende Erfindung betrifft ein Verfahren zum Anordnen von Vortexgeneratorelementen an einem Rotorblatt für eine Windenergieanlage, ein Rotorblatt, eine Windenergieanlage und einen Windpark.

Windenergieanlagen sind bekannt. Für einen effizienten Betrieb einer Windenergieanlage ist eine möglichst optimale Energieumwandlung aus dem Wind in elektrischen Strom wünschenswert. Hierfür spielt der durch den Wind an den Rotorblättern der Windenergieanlage generierte Auftrieb eine entscheidende Rolle. Die Optimierung des an den Rotorblättern generierten Auftriebs stellt daher ein bekanntes Problem in der Entwicklung von Windenergieanlagen dar. Es ist bekannt, dass mit zunehmendem Blattanstellwinkel, mit dem der einfallende Wind auf das Rotorblatt trifft, der Auftrieb des Rotorblattes zunimmt. Dies gilt jedoch nur bis zu einem gewissen kritischen Blattanstellwinkel, ab dem Strömungsablösungen der Windströmung von der Rotorblattoberfläche auftreten. Durch die Ablösung der Strömung vom Rotorblatt verringert sich der generierte Auftrieb.

Ein bekanntes Vorgehen zur Optimierung des Auftriebs ist die Bestückung der Rotorblätter mit sogenannten Vortexgeneratoren. Diese erzeugen Wirbel auf der Oberfläche der Rotorblätter und verhindern eine Strömungsablösung der Windströmung von der Rotorblattoberfläche. Somit können mit Vortexgeneratoren bestückte Rotorblätter mit höheren Blattanstellwinkeln betrieben werden, was zu einem höheren generierten Auftrieb an den Rotorblättern führt. Der kritische Blattanstellwinkel dieser Rotorblätter ist demnach höher. Dennoch bleibt die Tatsache, dass bei Blattanstellwinkeln über diesem kritischen Blattanstellwinkel Strömungsablösungen am Rotorblatt auftreten. Um bei auftretender Strömungsablösung den Auftrieb wieder zu steigern, muss der Blattanstellwinkel des Rotorblatts verringert werden.

Es wurde nun erkannt, dass bei einer solchen Verringerung des Blattanstellwinkels aufgrund von auftretender Strömungsablösung Hystereseeffekte auftreten. Hysterese bedeutet hierbei, dass die Strömung bei einer Variation des Blattanstellwinkels in Richtung höhere Blattanstellwinkel bei einem größeren Blattanstellwinkel ablöst, als sie bei einer Variation des Blattanstellwinkels in Richtung kleinere Blattanstellwinkel wieder anlegt.

Vor diesem Hintergrund liegt der Erfindung die Aufgabe zugrunde, den Auftrieb eines Rotorblatts einer Windenergieanlage zu optimieren und insbesondere bei Strömungsablösung auftretende Hystereseeffekte zu reduzieren.

Gemäß einem ersten Aspekt der Erfindung wird ein Verfahren zum Anordnen von Vortexgeneratorelementen an einem Rotorblatt für eine Windenergieanlage bereitgestellt, wobei sich das Rotorblatt von einer Rotorblattwurzel zu einer Rotorblattspitze mit einer Rotorblattlänge in Rotorblattlängsrichtung erstreckt, ein sich zwischen einer Rotorblattvorderkante und einer Rotorblatthinterkante in Rotorblattprofiltiefenrichtung erstreckendes Rotorblattprofil mit einer Rotorblattprofiltiefe aufweist und eine Saugseite und eine Druckseite aufweist, umfassend folgende Schritte: Ermitteln eines Maximums einer Druckverteilungs-Kurve, die eine mit negativem Vorzeichen aufgetragene Druckverteilung entlang des Rotorblattprofils in Rotorblattprofiltiefenrichtung auf einen Bereich des Rotorblatts bei einem kritischen Anstellwinkel in einem aufwärts gerichteten Teil einer aerodynamischen Polare des Rotorblattprofils angibt, als erstes Maximum, Ermitteln eines Maximums einer Druckverteilungs-Kurve, die eine mit negativem Vorzeichen aufgetragene Druckverteilung entlang des Rotorblattprofils in Rotorblattprofiltiefenrichtung auf den Bereich des Rotorblatts bei dem kritischen Anstellwinkel in einem abwärts gerichteten Teil der aerodynamischen Polare des Rotorblattprofils angibt, als zweites Maximum, Bestimmen einer ersten Position auf der Saugseite des Rotorblattes mit einem ersten Abstand zur Rotorblattvorderkante über wenigstens den Bereich des Rotorblattes in Rotorblattlängsrichtung anhand des ersten Maximums, Bestimmen einer zweiten Position auf der Saugseite des Rotorblattes mit einem zweiten Abstand zur Rotorblattvorderkante über wenigstens den Bereich des Rotorblattes in Rotorblattlängsrichtung anhand des zweiten Maximums, wobei der zweite Abstand kleiner ist als der erste Abstand, und Anordnen von Vortexgeneratorelementen an der ersten Position und an der zweiten Position.

Als Vortexgeneratorelemente werden hierbei Wirbel erzeugende Anbauteile für ein Rotorblatt einer Windenergieanlage angenommen, die bei Anbringung an das Rotorblatt bei Betrieb der Windenergieanlage Wirbel in der Windströmung über eine Oberfläche des Rotorblatts generieren.

Eine Druckverteilungs-Kurve nach dem erfindungsgemäßen Verfahren stellt die Druckverteilung entlang des Rotorblattprofils in Rotorblattprofiltiefenrichtung bei einem kritischen Blattanstellwinkel dar. Der kritische Blattanstellwinkel ist definiert als ein Winkel in dem die einfallende Windströmung auf das Rotorblatt trifft, ab dem bei zunehmendem Blattanstellwinkel Strömungsablösung der Windströmung von einer Oberfläche des Rotorblattes auftritt. Die Begriffe Anstellwinkel und Blattanstellwinkel sind dabei als gleichbedeutend zu betrachten. Die Druckverteilung entlang des Rotorblattprofils ist in dieser Druckverteilungs-Kurve mit einem negativen Vorzeichen aufgetragen, sodass der geringste Druck ein Maximum der Druckverteilungs-Kurve darstellt.

Eine erste Druckverteilungs-Kurve zeigt die Druckverteilung entlang des Rotorblattprofils in Rotorblattprofiltiefenrichtung auf einen Bereich des Rotorblatts in Rotorblattlängsrichtung bei einem kritischen Blattanstellwinkel in einem aufwärts gerichteten Teil einer aerodynamischen Polare des Rotorblattprofils. In einem aufwärts gerichteten Teil einer aerodynamischen Polare bedeutet hierbei, dass der kritische Blattanstellwinkel durch eine Variation des Blattanstellwinkels in Richtung höhere Blattanstellwinkel erreicht wurde.

Eine zweite Druckverteilungs-Kurve zeigt die Druckverteilung entlang des Rotorblattprofils in Rotorblattprofiltiefenrichtung auf den Bereich des Rotorblatts in Rotorblattlängsrichtung bei dem kritischen Blattanstellwinkel in einem abwärts gerichteten Teil der aerodynamischen Polare des Rotorblattprofils. In einem abwärts gerichteten Teil der aerodynamischen Polare bedeutet hierbei, dass der kritische Blattanstellwinkel durch eine Variation des Blattanstellwinkels in Richtung niedrigere Blattanstellwinkel erreicht wurde.

Die Definition einer Polare ist eine Messreihe aerodynamischer Beiwerte einer Profilsektion bei verschiedenen Anstellwinkeln. Die Messung kann hierbei beginnend mit kleinen Anstellwinkeln hin zu größeren Anstellwinkeln erfolgen (aufwärts gerichteter Teil der Polare) oder mit großen Anstellwinkeln beginnen abnehmend hin zu kleineren Anstellwinkeln (abwärts gerichteter Teil der Polare). Um eine Hysterese in einer Polare zu identifizieren ist sowohl eine aufwärts gerichtete Messung als auch eine abwärts gerichtete Messung erforderlich.

Durch die Hysterese weisen die Druckverteilungs-Kurven in einem aufwärts gerichteten Teil und einem abwärts gerichteten Teil einer aerodynamischen Polaren Abweichungen auf. Dies führt dazu, dass die Maxima dieser Druckverteilungs-Kurven für eine Position in Rotorblattlängsrichtung an unterschiedlichen Positionen in Rotorblattprofiltiefenrichtung liegen. Insbesondere liegt das Maximum einer Druckverteilungs-Kurve in einem aufwärts gerichteten Teil einer aerodynamischen Polaren, im Folgenden erstes Maximum, an einer Position mit größerem Abstand zur Rotorblattvorderkante als ein Maximum einer Druckverteilungs-Kurve in einem abwärts gerichteten Teil der aerodynamischen Polaren, im Folgenden zweites Maximum. Somit können Vortexgeneratoren, die an der Position in Rotorblattprofiltiefenrichtung des ersten Maximums angebracht sind, bei einer Strömungsablösung ihre Wirkung nicht oder nicht optimal entfalten, da sie in einem Bereich angebracht sind, der bei Strömungsablösung hinter dem Bereich des beginnenden Druckanstiegs und insbesondere hinter der Position des zweiten Maximums liegt. Dadurch kann zwar in der aufwärtsgerichteten Polare die Strömung länger anliegen, in der abwärtsgerichteten Polare, stellen sich jedoch keine Verbesserungen der aerodynamischen Eigenschaften des Rotorblatts durch das Anbringen der Vortexgeneratoren ein.

Hysterese bedeutet hierbei, dass die Strömung bei einer Variation des Blattanstellwinkels in Richtung höhere Blattanstellwinkel bei einem größeren Blattanstellwinkel ablöst, als sie bei einer Variation des Blattanstellwinkels in Richtung kleinere Blattanstellwinkel wieder anlegt.

Es wird daher ein Bereich von kritischen Blattanstellwinkeln angenommen, von dem Blattanstellwinkel, bei dem die Strömung bei Variation des Blattanstellwinkels in Richtung niedrigere Blattanstellwinkel aus der Strömungsablösung kommend wieder anlegt, bis zu dem Blattanstellwinkel bei dem bei Variation des Blattanstellwinkels in Richtung höhere Blattanstellwinkel aus anliegender Strömung kommend Strömungsablösung auftritt. Demnach umfasst der Bereich von kritischen Blattanstellwinkeln Blattanstellwinkel, bei denen die Strömung in einem aufwärts gerichteten Teil einer aerodynamischen Polare anliegt und in einem abwärts gerichteten Teil der aerodynamischen Polare abgelöst ist. Bei einem kritischen Blattanstellwinkel ist also von einem Blattanstellwinkel aus dem Bereich von kritischen Blattanstellwinkeln die Rede.

Als Bereich des Rotorblatts in Rotorblattlängsrichtung wird ein Bereich angenommen, für den die Druckverteilung auf das Rotorblatt von Rotorblattvorderkante bis Rotorblatthinterkante von einer ersten Position in Rotorblattlängsrichtung zu einer zweiten Position in Rotorblattlängsrichtung bereitgestellt wird. Insbesondere wird ein Teil des Rotorblatts oder das gesamte Rotorblatt in mehrere Bereiche unterteilt, für die jeweils ein erstes Maximum und ein zweites Maximum bestimmt werden.

Der Schritt des Bestimmens einer ersten Position auf der Saugseite des Rotorblatts mit einem ersten Abstand zur Rotorblattvorderkante über wenigstens den Bereich des Rotorblatts in Rotorblattlängsrichtung anhand des ersten Maximums umfasst ein Bestimmen einer Position des ersten Maximums in Rotorblattprofiltiefenrichtung aus der Druckverteilungs-Kurve. Die Position des ersten Maximums in Rotorblattprofiltiefenrichtung gibt einen Abstand zur Rotorblattvorderkante und einen Abstand zur Rotorblatthinterkante in Rotorblattprofiltiefenrichtung an. Für das Bestimmen der ersten Position wird die Position des ersten Maximums herangezogen, sodass die erste Position den gleichen Abstand zur Rotorblattvorderkante und den gleichen Abstand zur Rotorblatthinterkante in Rotorblattprofiltiefenrichtung aufweist wie das erste Maximum. Wird ein Teil des Rotorblatts oder das gesamte Rotorblatt in mehrere Bereiche unterteilt, wird dieser Schritt für jeden der mehreren Bereiche durchgeführt, sodass für jeden Bereich eine erste Position bestimmt wird.

Der Schritt des Bestimmens einer zweiten Position auf der Saugseite des Rotorblatts mit einem zweiten Abstand zur Rotorblattvorderkante über wenigstens den Bereich des Rotorblatts in Rotorblattlängsrichtung anhand des zweiten Maximums umfasst ein Bestimmen einer Position des zweiten Maximums in Rotorblattprofiltiefenrichtung aus der Druckverteilungs-Kurve. Die Position des zweiten Maximums in Rotorblattprofiltiefenrichtung gibt einen Abstand zur Rotorblattvorderkante und einen Abstand zur Rotorblatthinterkante in Rotorblattprofiltiefenrichtung an. Für das Bestimmen der zweiten Position wird die Position des zweiten Maximums herangezogen, sodass die zweite Position den gleichen Abstand zur Rotorblattvorderkante und den gleichen Abstand zur Rotorblatthinterkante in Rotorblattprofiltiefenrichtung aufweist wie das zweite Maximum. Wird ein Teil des Rotorblatts oder das gesamte Rotorblatt in mehrere Bereiche unterteilt, wird dieser Schritt für jeden der mehreren Bereiche durchgeführt, sodass für jeden Bereich eine zweite Position bestimmt wird.

Durch die Hysterese ist die Position des zweiten Maximums in Rotorblattprofiltiefenrichtung näher an der Rotorblattvorderkante als die Position des ersten Maximums. Daher ist der zweite Abstand kleiner als der erste Abstand.

Bei einer Unterteilung eines Teils des Rotorblatts oder des gesamten Rotorblatts in mehrere Bereiche werden vorzugsweise für jeden Bereich eine erste Position mit einem ersten Abstand und eine zweite Position mit einem zweiten Abstand bestimmt. Alternativ ist auch denkbar, dass eine erste Position mit einem ersten Abstand und eine zweite Position mit einem zweiten Abstand lediglich für einen der mehreren Bereiche bestimmt werden und der erste Abstand und der zweite Abstand als konstante relative Abstände von der Rotorblattvorderkante auf die weiteren Bereiche übertragen werden, wobei die konstanten relativen Abstände relativ zur Rotorblattprofiltiefe bestimmt werden. Hierfür kann beispielsweise für jeden Bereich eine durchschnittliche Rotorblattprofiltiefe bestimmt werden.

Der Schritt des Anordnens von Vortexgeneratorelementen an der ersten Position und an der zweiten Position umfasst ein Anordnen derart, dass die Vortexgeneratorelemente an dem Rotorblatt befestigt sind und bei Betrieb der Windenergieanlage Wirbel auf der Saugseite des Rotorblatts erzeugen. Das Befestigen kann auch mithilfe eines Befestigungsmittels erfolgen.

Vorzugsweise umfasst der Schritt des Anordnens von Vortexgeneratorelementen an der ersten Position und an der zweiten Position ein Anordnen derart, dass in einem angeordneten Zustand der Vortexgeneratorelemente an dem Rotorblatt ein Abstand in Rotorblattlängsrichtung zwischen den Positionen in Rotorblattlängsrichtung an denen die Vortexgeneratorelemente angeordnet sind zwischen je zwei der Vortexgeneratorelemente gleich ist.

Das erfindungsgemäße Verfahren ermöglicht eine strömungsstabilisierende Wirkung im Bereich des Druckanstiegs bei abgelöster Strömung bei gleichzeitiger Erhaltung eines größtmöglichen Teils an laminarer Strömung.

Durch die Positionierung von Vortexgeneratorelementen an der zweiten Position sind diese Vortexgeneratorelemente auch bei potentiell abgelöster Strömung wirksam, wirken der Strömungsablösung entgegen und ermöglichen ein Anlegen Strömung an das Rotorblatt. Die Effekte der Hysterese werden demnach verhindert oder zumindest verringert.

Durch die Positionierung von Vortexgeneratorelementen an der ersten Position wird der Strömung mehr laminare Lauflänge ermöglicht, verglichen mit einer ausschließlichen Anordnung von Vortexgeneratorelementen an der zweiten Position. Diese ausschließliche Anordnung von Vortexgeneratorelementen an der zweiten Position würde eine signifikante Reduzierung des Anteils von laminarer Strömung herbeiführen. Per Definition wird hierbei laminare Strömung bei Interaktion mit einem Vortexgeneratorelement turbulent. Da laminare Strömung das Profil reibungsärmer umströmt als vollturbulente Strömung, führt die Reduzierung des Anteils der laminaren Strömung zu einem Widerstandsanstieg. Eine Grenzschicht an einem Profil mit früherer Transition ist darüber hinaus dicker als eine Grenzschicht am gleichen Profil bei der die Transition erst später erfolgt. Die Aufdickung der Grenzschicht führt zu einer effektiven Entwölbung der betroffenen Profilsektion und reduziert deren Auftrieb. Die beiden genannten Effekte Widerstandsanstieg und Auftriebsreduktion reduzieren im Resultat deutlich die Gleitleistung der Profilsektion. Die Positionierung von Vortexgeneratorelementen an der ersten Position wirkt dem entgegen, sodass durch eine erfindungsgemäße Anordnung der Vortexgeneratorelemente sowohl der Hysterese positiv entgegengewirkt wird, als auch eine signifikante Reduzierung des Auftriebs verhindert wird.

Gemäß einer vorteilhaften Ausführungsform des ersten Aspekts der Erfindung, umfasst der Schritt des Anordnens der Vortexgeneratorelemente ein Anordnen der Vortexgeneratorelemente derart, dass in Rotorblattlängsrichtung von drei aufeinander folgenden Vortexgeneratorelementen maximal zwei Vortexgeneratorelemente an derselben der ersten Position oder der zweiten Position angeordnet sind, wobei aufeinander folgend sich auf eine Anordnung in Rotorblattlängsrichtung und insbesondere auf einen Abstand zur Rotorblattwurzel bezieht.

In dieser Ausführungsform ist der Bereich des Rotorblatts derart ausgestaltet, dass mindestens drei Vortexgeneratorelemente an der ersten und/oder zweiten Position nebeneinander in Rotorblattlängsrichtung aufeinander folgend angebracht werden können. Die Größe des Bereichs ist damit also in Rotorblattlängsrichtung mindestens so breit wie drei nebeneinander angeordnete Vortexgeneratorelemente.

Die drei aufeinander folgenden Vortexgeneratoren weißen insbesondere in Rotorblattlängsrichtung unterschiedliche Positionen auf. In Rotorblattprofiltiefenrichtung weisen die Vortexgeneratorelemente die erste Position oder die zweite Position auf.

Die in dem Bereich des Rotorblatts angebrachten Vortexgeneratorelemente sind in dieser Ausführungsform derart angeordnet, dass von drei in Rotorblattlängsrichtung aufeinander folgenden Vortexgeneratorelementen maximal zwei Vortexgeneratorelemente an der ersten Position und maximal zwei Vortexgeneratorelemente an der zweiten Position angebracht sind. Drei in Rotorblattlängsrichtung aufeinander folgende Vortexgeneratorelemente bedeutet dabei, dass in dem Bereich des Rotorblatts zwischen einer ersten Position in Rotorblattlängsrichtung, an der ein erstes der drei Vortexgeneratorelemente angeordnet ist, und einer zweiten Position in Rotorblattlängsrichtung, an der ein zweites der drei Vortexgeneratorelemente angeordnet ist, lediglich ein weiteres Vortexgeneratorelement angeordnet ist, nämlich das dritte der drei Vortexgeneratorelemente.

Für die Anordnung der drei in Rotorblattlängsrichtung aufeinander folgenden Vortexgeneratorelemente ergeben sich in dieser Ausführungsform also die folgenden Möglichkeiten für die Anordnung in Rotorblattlängsrichtung: erste Position - erste Position - zweite Position; erste Position - zweite Position - erste Position; zweite Position - erste Position - erste Position; zweite Position - zweite Position - erste Position; erste Position - zweite Position - zweite Position; zweite Position - erste Position - zweite Position.

Durch eine solche Anordnung wird eine strömungsstabilisierende Wirkung im Bereich des Druckanstiegs bei abgelöster Strömung bei gleichzeitiger Erhaltung eines größtmöglichen Teils an laminarer Strömung erzielt.

Gemäß einer weiteren vorteilhaften Ausführungsform des ersten Aspekts der Erfindung, umfasst der Schritt des Anordnens der Vortexgeneratorelemente ein Anordnen der Vortexgeneratorelemente derart, dass in Rotorblattlängsrichtung zwei aufeinander folgende Vortexgeneratorelemente nicht an derselben der ersten Position oder der zweiten Position angeordnet sind.

In dieser Ausführungsform sind die Vortexgeneratorelemente insbesondere in Rotorblattlängsrichtung abwechselnd an der ersten Position und an der zweiten Position angeordnet.

Durch eine solche Anordnung wird eine strömungsstabilisierende Wirkung im Bereich des Druckanstiegs bei abgelöster Strömung bei gleichzeitiger Erhaltung eines größtmöglichen Teils an laminarer Strömung erzielt.

Gemäß einer weiteren vorteilhaften Ausführungsform des ersten Aspekts der Erfindung, umfasst das Verfahren ferner die Schritte: Bestimmen einer dritten Position auf der Saugseite des Rotorblattes mit einem dritten Abstand zur Rotorblattvorderkante in Rotorblattlängsrichtung über wenigstens den Bereich des Rotorblattes, wobei der zweite Abstand kleiner als der dritte Abstand und der dritte Abstand kleiner als der erste Abstand ist, Anordnen von Vortexgeneratorelementen an der dritten Position, derart, dass in Rotorblattlängsrichtung zwei aufeinander folgende Vortexgeneratorelemente nicht an derselben der ersten Position oder der zweiten Position angeordnet sind.

In dieser Ausführungsform werden Vortexgeneratorelemente an einer dritten Position in Rotorblattprofiltiefenrichtung zwischen der ersten Position und der zweiten Position angebracht.

Vorzugsweise umfasst der Schritt des Anordnens von Vortexgeneratorelementen an der ersten Position und an der zweiten Position und des Anordnens von Vortexgeneratorelementen an der dritten Position ein Anordnen derart, dass in einem angeordneten Zustand der Vortexgeneratorelemente an dem Rotorblatt ein Abstand in Rotorblattlängsrichtung zwischen den Positionen in Rotorblattlängsrichtung an denen die Vortexgeneratorelemente angeordnet sind zwischen je zwei der Vortexgeneratorelemente gleich ist.

Vorzugsweise wird die dritte Position als Mitte zwischen der ersten Position und der zweiten Position bestimmt, sodass der dritte Abstand ein Mittelwert des ersten Abstands und des zweiten Abstands ist.

Bei einer Unterteilung eines Teils des Rotorblatts oder des gesamten Rotorblatts in mehrere Bereiche werden vorzugsweise für jeden Bereich eine erste Position mit einem ersten Abstand, eine zweite Position mit einem zweiten Abstand und eine dritte Position mit einem dritten Abstand bestimmt. Alternativ ist auch denkbar, dass eine erste Position mit einem ersten Abstand, eine zweite Position mit einem zweiten Abstand und eine dritte Position mit einem dritten Abstand lediglich für einen der mehreren Bereiche bestimmt werden und der erste Abstand, der zweite Abstand und der dritte Abstand als konstante relative Abstände von der Rotorblattvorderkante auf die weiteren Bereiche übertragen werden, wobei die konstanten relativen Abstände relativ zur Rotorblattprofiltiefe bestimmt werden. Hierfür kann beispielsweise für jeden Bereich eine durchschnittliche Rotorblattprofiltiefe bestimmt werden.

Durch eine solche Anordnung wird eine strömungsstabilisierende Wirkung im Bereich des Druckanstiegs bei abgelöster Strömung bei gleichzeitiger Erhaltung eines größtmöglichen Teils an laminarer Strömung erzielt.

Gemäß einer bevorzugten Variante der obigen Ausführungsform des ersten Aspekts der Erfindung, umfasst der Schritt des Anordnens der Vortexgeneratorelemente ein Anordnen der Vortexgeneratorelemente derart, dass in Rotorblattlängsrichtung abwechselnd auf ein erstes an dritter Position angeordnetes Vortexgeneratorelement ein an erster Position angeordnetes Vortexgeneratorelement und auf ein zweites an dritter Position angeordnetes Vortexgeneratorelement ein an zweiter Position angeordnetes Vortexgeneratorelement folgt.

In dieser Ausführungsform ist kein weiteres Vortexgeneratorelement an der dritten Position zwischen dem ersten an dritter Position angeordneten Vortexgeneratorelement und dem zweiten an dritter Position angeordneten Vortexgeneratorelement angeordnet.

Es ist allerdings denkbar, dass in Rotorblattlängsrichtung nach dem an erster Position angeordneten Vortexgeneratorelement und vor dem an zweiter Position angeordneten Vortexgeneratorelement weitere Vortexgeneratorelemente an der ersten Position oder der zweiten Position angeordnet sind.

Bevorzugt ist jedoch, dass zwischen dem ersten an dritter Position angeordneten Vortexgeneratorelement und dem zweiten an dritter Position angeordneten Vortexgeneratorelement lediglich ein an erster Position angeordnetes Vortexgeneratorelement angeordnet ist.

Besonders bevorzugt ist, dass in Rotorblattlängsrichtung nach dem zweiten an dritter Position angeordneten Vortexgeneratorelement ein an zweiter Position angeordnetes Vortexgeneratorelement angeordnet ist und darauf folgend wieder ein erstes an dritter Position angeordnetes Vortexgeneratorelement, sodass eine Zick-Zack-Anordnung entsteht, beispielsweise: dritte Position - erste Position - dritte Position - zweite Position - dritte Position - erste Position - dritte Position - zweite Position - und so weiter.

Eine solche Anordnung ist besonders geeignet um eine strömungsstabilisierende Wirkung im Bereich des Druckanstiegs bei abgelöster Strömung bei gleichzeitiger Erhaltung eines größtmöglichen Teils an laminarer Strömung zu erzielen.

Gemäß einer weiteren vorteilhaften Ausführungsform des ersten Aspekts der Erfindung, weisen die Vortexgeneratorelemente eine von der Position an der sie angeordnet sind abhängige Größe auf.

Insbesondere handelt es sich bei der Position an der die Vortexgeneratorelemente angeordnet sind um eine der ersten Position oder der zweiten Position, bevorzugt auch der dritten Position, also einer Position in Rotorblattprofiltiefenrichtung, die einen Abstand zur Rotorblattvorderkante in Rotorblattprofiltiefenrichtung angibt.

Eine Ausgestaltung der Größe der Vortexgeneratorelemente entsprechend der Position an der sie angeordnet sind ermöglicht es die strömungsstabilisierende Wirkung im Bereich des Druckanstiegs bei abgelöster Strömung durch eine Größenanpassung der Vortexgeneratorelemente an zweiter Position und gleichzeitig eine Erhaltung eines größtmöglichen Teils an laminarer Strömung durch eine Größenanpassung der Vortexgeneratorelemente an erster Position zu verbessern.

Gemäß einer bevorzugten Variante der obigen Ausführungsform des ersten Aspekts der Erfindung, ist die Größe der Vortexgeneratorelemente mit zunehmendem relativen Abstand zur Rotorblattvorderkante zunehmend ausgestaltet, wobei der relative Abstand zur Rotorblattvorderkante relativ zur Rotorblattprofiltiefe ausgestaltet ist.

In dieser Ausführungsform sind die Vortexgeneratorelemente an zweiter Position kleiner als die Vortexgeneratorelemente an erster Position. Insbesondere sind die Vortexgeneratorelemente an zweiter Position kleiner als Vortexgeneratorelemente an der dritten Position und diese wiederum kleiner als die Vortexgeneratorelemente an erster Position.

Durch die kleiner ausgestalteten Vortexgeneratorelemente an zweiter Position wird die Wirbelgenerierung verstärkt, sodass bei abgelöster Strömung die strömungsstabilisierende Wirkung im Bereich des Druckanstiegs früher eintreten kann. Die größere Ausgestaltung der Vortexgeneratorelemente an erster Position begünstigt die Erhaltung eines größtmöglichen Teils an laminarer Strömung.

Des Weiteren berücksichtigt die kleinere Ausführung der Vortexgeneratorelemente an zweiter Position die dünnere Grenzschicht an der zweiten, weiter stromauf liegenden Position. So kann die aerodynamische Güte einer solchen Blattsektion im Vergleich zur Anordnung gleich großer Vortexgeneratorelemente an erster und zweiter Position deutlich verbessert werden.

Gemäß einer weiteren vorteilhaften Ausführungsform des ersten Aspekts der Erfindung, beträgt der zweite Abstand mindestens 10 % der Rotorblattprofiltiefe.

Ein zweiter Abstand von mindestens 10 % der Rotorblattprofiltiefe stellt sicher, dass die an zweiter Position angeordneten Vortexgeneratorelemente auch ihre vorgesehene Wirkung entfalten können und Wirbel über die Saugseite des Rotorblatts erzeugen, die zur Stabilisierung der Strömung im Bereich des Druckanstiegs bei abgelöster Strömung beitragen. Bevorzugt beträgt der zweite Abstand mindestens 15 % der Rotorblattprofiltiefe, besonders bevorzugt mindestens 20 % der Rotorblattprofiltiefe.

Gemäß einer weiteren vorteilhaften Ausführungsform des ersten Aspekts der Erfindung, beträgt der erste Abstand mindestens 11 % der Rotorblattprofiltiefe.

Ein erster Abstand von mindestens 11 % der Rotorblattprofiltiefe stellt sicher, dass laminare Strömung über einen möglichst großen Teil der Saugseite in Rotorblattprofiltiefenrichtung erhalten bleibt. Bevorzugt beträgt der erste Abstand mindestens 20 % der Rotorblattprofiltiefe, besonders bevorzugt mindestens 30 % der Rotorblattprofiltiefe.

Insbesondere ist der erste Abstand größer als ein zweiter Abstand, sodass Vortexgeneratoren die an der ersten Position mit erstem Abstand zur Rotorblattvorderkante angeordnet sind von Vortexgeneratoren die an der zweiten Position mit zweitem Abstand zur Rotorblattvorderkante angeordnet sind, in Rotorblattlängsrichtung voneinander beabstandet sind.

Gemäß einer weiteren vorteilhaften Ausführungsform des ersten Aspekts der Erfindung, ist der erste Abstand als erster konstanter relativer Wert der Rotorblattprofiltiefe ausgestaltet, und der zweite Abstand als zweiter konstanter relativer Wert der Rotorblattprofiltiefe ausgestaltet, wobei der zweite konstante relative Wert der Rotorblattprofiltiefe kleiner ist als der erste konstante relative Wert der Rotorblattprofiltiefe.

In dieser Ausführungsform ist ein Teil des Rotorblatts oder das gesamte Rotorblatt in mehrere Bereiche unterteilt. Für jeden dieser Bereiche sind der erste Abstand und der zweite Abstand als ein erster konstanter relativer Wert der Rotorblattprofiltiefe beziehungsweise ein zweiter konstanter relativer Wert der Rotorblattprofiltiefe ausgestaltet. Beispielsweise beträgt der erste Abstand 20 % der Rotorblattprofiltiefe und der zweite Abstand 10 % der Rotorblattprofiltiefe in jedem der Bereiche. Bevorzugt wird für jeden der Bereiche eine durchschnittliche Rotorblattprofiltiefe berechnet, sodass der erste Abstand und der zweite Abstand über die Länge in Rotorblattlängsrichtung eines Bereichs konstant sind.

Gemäß einem zweiten Aspekt der Erfindung, wird ein Verfahren zum Anordnen von Vortexgeneratorelementen an einem Rotorblatt für eine Windenergieanlage bereitgestellt, wobei sich das Rotorblatt von einer Rotorblattwurzel zu einer Rotorblattspitze mit einer Rotorblattlänge in Rotorblattlängsrichtung erstreckt, ein sich zwischen einer Rotorblattvorderkante und einer Rotorblatthinterkante in Rotorblattprofiltiefenrichtung erstreckendes Rotorblattprofil mit einer Rotorblattprofiltiefe aufweist und eine Saugseite und eine Druckseite aufweist, umfassend folgende Schritte: Ermitteln eines ersten Maximums einer Druckverteilungs-Kurve, die eine mit negativem Vorzeichen aufgetragene Druckverteilung entlang des Rotorblattprofils auf einen Bereich des Rotorblatts bei einem kritischen Anstellwinkel in einem aufwärts gerichteten Teil einer aerodynamischen Polare des Rotorblattprofils angibt, Bestimmen einer ersten Position auf der Saugseite des Rotorblattes mit einem ersten Abstand zur Rotorblattvorderkante über wenigstens den Bereich des Rotorblattes in Rotorblattlängsrichtung anhand des ersten Maximums, Anordnen von Vortexgeneratorelementen einer ersten Größe und Vortexgeneratorelementen einer zweiten Größe an der ersten Position über wenigstens den Bereich des Rotorblattes, derart, dass in Rotorblattlängsrichtung die Vortexgeneratorelemente der ersten Größe und die Vortexgeneratorelemente der zweiten Größe abwechselnd angeordnet sind, sodass auf ein Vortexgeneratorelement der ersten Größe ein Vortexgeneratorelement der zweiten Größe folgt und auf ein Vortexgeneratorelement der zweiten Größe ein Vortexgeneratorelement der ersten Größe folgt.

Eine abwechselnde Anordnung von Vortexgeneratorelementen einer ersten Größe und Vortexgeneratorelementen einer zweiten Größe wirkt der Hysterese derart entgegen, dass die Vortexgeneratorelemente der kleineren der ersten Größe und der zweiten Größe bei abgelöster Strömung eine strömungsstabilisierende Wirkung im Bereich des Druckanstiegs erzeugen und die Vortexgeneratorelemente der größeren der ersten Größe und der zweiten Größe einen größtmöglichen Teil der laminaren Strömung erhalten. Bei Strömungsablösung legt die Strömung also bei abnehmender Variation des Blattanstellwinkels schneller wieder an, sodass der Auftrieb des Rotorblatts optimiert ist.

Gemäß einer vorteilhaften Ausführungsform des zweiten Aspekts der Erfindung, beträgt der Abstand zur Rotorblattvorderkante mindestens 10 % der Rotorblattprofiltiefe.

Ein Abstand von mindestens 10 % der Rotorblattprofiltiefe stellt sicher, dass die Vortexgeneratorelemente der kleineren der ersten Größe und der zweiten Größe auch ihre vorgesehene Wirkung entfalten können und Wirbel über die Saugseite des Rotorblatts erzeugen, die zur Stabilisierung der Strömung im Bereich des Druckanstiegs bei abgelöster Strömung beitragen. Bevorzugt beträgt der Abstand mindestens 15 % der Rotorblattprofiltiefe, besonders bevorzugt mindestens 20 % der Rotorblattprofiltiefe.

Gemäß einer weiteren vorteilhaften Ausführungsform des ersten oder zweiten Aspekts der Erfindung, umfassen die Vortexgeneratorelemente je ein Paar für eine aerodynamische Wirksamkeit des Vortexgeneratorelements zusammengehörige Vortexgeneratoren auf einer Sockelplatte pro Vortexgeneratorelement.

Insbesondere weisen beide Vortexgeneratoren des Paars zusammengehöriger Vortexgeneratoren eine längliche Ausgestaltung auf. Bevorzugt sind die beiden Vortexgeneratoren derart auf der Sockelplatte angeordnet, dass die länglichen Ausgestaltungen der beiden Vortexgeneratoren nicht parallel ausgerichtet sind. Besonders bevorzugt sind die beiden Vortexgeneratoren derart auf der Sockelplatte angeordnet, dass bei einer erfindungsgemäßen Anordnung auf der Saugseite des Rotorblatts die längliche Ausgestaltung der Vortexgeneratoren in im Wesentlichen Rotorblattprofiltiefenrichtung ausgerichtet ist.

In einem bevorzugten Beispiel sind die Proportionen der beiden Vortexgeneratoren zueinander und insbesondere auch zur Sockelplatte für jedes Vortexgeneratorelement konstant, auch wenn sich die absolute Größe der Vortexgeneratorelemente untereinander unterscheidet.

Gemäß einer weiteren vorteilhaften Ausführungsform des ersten oder zweiten Aspekts der Erfindung, weist das Rotorblatt senkrecht zur Rotorblattprofiltiefenrichtung und senkrecht zur Rotorblattlängsrichtung eine Rotorblattdicke auf, gibt eine relative Dicke das Verhältnis von Rotorblattdicke zu Rotorblattprofiltiefe an, und handelt es sich bei dem Bereich des Rotorblattes um einen Bereich des Rotorblattes, an dem das Rotorblatt eine relative Dicke von mindestens 20 % aufweist.

Es ist eine Erkenntnis der Erfindung, dass Bereiche des Rotorblattes mit einer relativen Dicke von über 20 % besonders anfällig für die negativen Effekte von Hysteresen sind. Gerade in diesen dicken Bereichen ist der technische Effekt, den die Erfindung bereitstellt, besonders wirksam.

Bevorzugt handelt es sich bei dem Bereich des Rotorblatts um einen Bereich des Rotorblatts, an dem das Rotorblatt eine relative Dicke von mindestens 25 %, besonders bevorzugt mindestens 30 % aufweist.

Gemäß einem dritten Aspekt der Erfindung, wird ein Rotorblatt für eine Windenergieanlage bereitgestellt, wobei sich das Rotorblatt von einer Rotorblattwurzel zu einer Rotorblattspitze mit einer Rotorblattlänge in Rotorblattlängsrichtung erstreckt, eine sich zwischen einer Rotorblattvorderkante und einer Rotorblatthinterkante in Rotorblattprofiltiefenrichtung erstreckende Rotorblattprofiltiefe aufweist und eine Saugseite und eine Druckseite aufweist, wobei die Saugseite Vortexgeneratorelemente aufweist, eine erste Position auf der Saugseite des Rotorblattes mit einem ersten Abstand zur Rotorblattvorderkante in Rotorblattlängsrichtung über wenigstens einen Bereich des Rotorblattes definiert ist, eine zweite Position auf der Saugseite des Rotorblattes mit einem zweiten Abstand zur Rotorblattvorderkante über wenigstens einen Bereich des Rotorblattes in Rotorblattlängsrichtung definiert ist, der zweite Abstand kleiner ist als der erste Abstand, und die Vortexgeneratorelemente an der ersten Position und an der zweiten Position angeordnet sind, derart, dass in Rotorblattlängsrichtung von drei aufeinander folgenden Vortexgeneratorelementen maximal zwei Vortexgeneratorelemente an derselben der ersten Position oder der zweiten Position angeordnet sind, wobei aufeinander folgend sich auf eine Anordnung in Rotorblattlängsrichtung und insbesondere auf einen Abstand zur Rotorblattwurzel bezieht.

Der Bereich des Rotorblatts ist derart ausgestaltet, dass mindestens drei Vortexgeneratorelemente an der ersten und/oder zweiten Position nebeneinander in Rotorblattlängsrichtung aufeinander folgend angebracht werden können. Die Größe des Bereichs ist damit also in Rotorblattlängsrichtung mindestens so breit wie drei nebeneinander angeordnete Vortexgeneratorelemente.

Die drei aufeinander folgenden Vortexgeneratoren weißen insbesondere in Rotorblattlängsrichtung unterschiedliche Positionen auf. In Rotorblattprofiltiefenrichtung weisen die Vortexgeneratorelemente die erste Position oder die zweite Position auf.

Die in dem Bereich des Rotorblatts angebrachten Vortexgeneratorelemente sind derart angeordnet, dass von drei in Rotorblattlängsrichtung aufeinander folgenden Vortexgeneratorelementen maximal zwei Vortexgeneratorelemente an der ersten Position und maximal zwei Vortexgeneratorelemente an der zweiten Position angebracht sind. Drei in Rotorblattlängsrichtung aufeinander folgende Vortexgeneratorelemente bedeutet dabei, dass in dem Bereich des Rotorblatts zwischen einer ersten Position in Rotorblattlängsrichtung, an der ein erstes der drei Vortexgeneratorelemente angeordnet ist, und einer zweiten Position in Rotorblattlängsrichtung, an der ein zweites der drei Vortexgeneratorelemente angeordnet ist, lediglich ein weiteres Vortexgeneratorelement angeordnet ist, nämlich das dritte der drei Vortexgeneratorelemente.

Für die Anordnung der drei in Rotorblattlängsrichtung aufeinander folgenden Vortexgeneratorelemente ergeben sich in dieser Ausführungsform also die folgenden Möglichkeiten für die Anordnung in Rotorblattlängsrichtung: erste Position - erste Position - zweite Position; erste Position - zweite Position - erste Position; zweite Position - erste Position - erste Position; zweite Position - zweite Position - erste Position; erste Position - zweite Position - zweite Position; zweite Position - erste Position - zweite Position.

Durch eine solche Anordnung wird eine strömungsstabilisierende Wirkung im Bereich des Druckanstiegs bei abgelöster Strömung bei gleichzeitiger Erhaltung eines größtmöglichen Teils an laminarer Strömung erzielt.

Gemäß einer vorteilhaften Ausführungsform des dritten Aspekts der Erfindung, sind in Rotorblattlängsrichtung zwei aufeinander folgende Vortexgeneratorelemente nicht an derselben der ersten Position oder der zweiten Position angeordnet.

In dieser Ausführungsform sind die Vortexgeneratorelemente insbesondere in Rotorblattlängsrichtung abwechselnd an der ersten Position und an der zweiten Position angeordnet.

Durch eine solche Anordnung wird eine strömungsstabilisierende Wirkung im Bereich des Druckanstiegs bei abgelöster Strömung bei gleichzeitiger Erhaltung eines größtmöglichen Teils an laminarer Strömung erzielt.

Gemäß einer weiteren vorteilhaften Ausführungsform des dritten Aspekts der Erfindung, ist eine dritte Position auf der Saugseite des Rotorblattes mit einem dritten Abstand zur Rotorblattvorderkante in Rotorblattlängsrichtung über wenigstens einen Bereich des Rotorblattes definiert ist, der zweite Abstand kleiner als der dritte Abstand und der dritte Abstand kleiner als der erste Abstand ist, Vortexgeneratorelemente an der dritten Position angeordnet sind, derart, dass in Rotorblattlängsrichtung zwei aufeinander folgende Vortexgeneratorelemente nicht an derselben der ersten Position oder der zweiten Position angeordnet sind.

In dieser Ausführungsform werden Vortexgeneratorelemente an einer dritten Position in Rotorblattprofiltiefenrichtung zwischen der ersten Position und der zweiten Position angebracht.

Vorzugsweise ist ein Abstand in Rotorblattlängsrichtung zwischen den Positionen der Vortexgeneratorelemente in Rotorblattlängsrichtung zwischen je zwei der Vortexgeneratorelemente gleich.

Vorzugsweise ist die dritte Position eine Mitte zwischen der ersten Position und der zweiten Position, sodass der dritte Abstand ein Mittelwert des ersten Abstands und des zweiten Abstands ist.

Bei einer Unterteilung eines Teils des Rotorblatts oder des gesamten Rotorblatts in mehrere Bereiche weist vorzugsweise jeder Bereich eine erste Position mit einem ersten Abstand, eine zweite Position mit einem zweiten Abstand und eine dritte Position mit einem dritten Abstand auf. Alternativ ist auch denkbar, dass eine erste Position mit einem ersten Abstand, eine zweite Position mit einem zweiten Abstand und eine dritte Position mit einem dritten Abstand lediglich für einen der mehreren Bereiche bestimmt werden und der erste Abstand, der zweite Abstand und der dritte Abstand als konstante relative Abstände von der Rotorblattvorderkante auf die weiteren Bereiche übertragen werden, wobei die konstanten relativen Abstände relativ zur Rotorblattprofiltiefe bestimmt sind. Hierfür kann beispielsweise für jeden Bereich eine durchschnittliche Rotorblattprofiltiefe bestimmt werden.

Durch eine solche Anordnung wird eine strömungsstabilisierende Wirkung im Bereich des Druckanstiegs bei abgelöster Strömung bei gleichzeitiger Erhaltung eines größtmöglichen Teils an laminarer Strömung erzielt.

Gemäß einer bevorzugten Variante der obigen Ausführungsform des dritten Aspekts der Erfindung, folgt in Rotorblattlängsrichtung abwechselnd auf ein erstes an dritter Position angeordnetes Vortexgeneratorelement ein an erster Position angeordnetes Vortexgeneratorelement und auf ein zweites an dritter Position angeordnetes Vortexgeneratorelement ein an zweiter Position angeordnetes Vortexgeneratorelement.

In dieser Ausführungsform ist kein weiteres Vortexgeneratorelement an der dritten Position zwischen dem ersten an dritter Position angeordneten Vortexgeneratorelement und dem zweiten an dritter Position angeordneten Vortexgeneratorelement angeordnet.

Es ist allerdings denkbar, dass in Rotorblattlängsrichtung nach dem an erster Position angeordneten Vortexgeneratorelement und vor dem an zweiter Position angeordneten Vortexgeneratorelement weitere Vortexgeneratorelemente an der ersten Position oder der zweiten Position angeordnet sind.

Bevorzugt ist jedoch, dass zwischen dem ersten an dritter Position angeordneten Vortexgeneratorelement und dem zweiten an dritter Position angeordneten Vortexgeneratorelement lediglich ein an erster Position angeordnetes Vortexgeneratorelement angeordnet ist.

Besonders bevorzugt ist, dass in Rotorblattlängsrichtung nach dem zweiten an dritter Position angeordneten Vortexgeneratorelement ein an zweiter Position angeordnetes Vortexgeneratorelement angeordnet ist und darauf folgend wieder ein erstes an dritter Position angeordnetes Vortexgeneratorelement, sodass eine Zick-Zack-Anordnung entsteht, beispielsweise: dritte Position - erste Position - dritte Position - zweite Position - dritte Position - erste Position - dritte Position - zweite Position - und so weiter.

Eine solche Anordnung ist besonders geeignet um eine strömungsstabilisierende Wirkung im Bereich des Druckanstiegs bei abgelöster Strömung bei gleichzeitiger Erhaltung eines größtmöglichen Teils an laminarer Strömung zu erzielen.

Gemäß einer weiteren vorteilhaften Ausführungsform des dritten Aspekts der Erfindung, weisen die Vortexgeneratorelemente eine von der Position an der sie angeordnet sind abhängige Größe auf.

Insbesondere handelt es sich bei der Position an der die Vortexgeneratorelemente angeordnet sind um eine der ersten Position oder der zweiten Position, bevorzugt auch der dritten Position, also einer Position in Rotorblattprofiltiefenrichtung, die einen Abstand zur Rotorblattvorderkante in Rotorblattprofiltiefenrichtung angibt.

Eine Ausgestaltung der Größe der Vortexgeneratorelemente entsprechend der Position an der sie angeordnet sind ermöglicht es die strömungsstabilisierende Wirkung im Bereich des Druckanstiegs bei abgelöster Strömung durch eine Größenanpassung der Vortexgeneratorelemente an zweiter Position und gleichzeitig eine Erhaltung eines größtmöglichen Teils an laminarer Strömung durch eine Größenanpassung der Vortexgeneratorelemente an erster Position zu verbessern.

Gemäß einer bevorzugten Variante der obigen Ausführungsform des dritten Aspekts der Erfindung, ist die Größe der Vortexgeneratorelemente mit zunehmendem relativem Abstand zur Rotorblattvorderkante zunehmend ausgestaltet ist, wobei der relative Abstand zur Rotorblattvorderkante relativ zur Rotorblattprofiltiefe ausgestaltet ist.

In dieser Ausführungsform sind die Vortexgeneratorelemente an zweiter Position kleiner als die Vortexgeneratorelemente an erster Position. Insbesondere sind die Vortexgeneratorelemente an zweiter Position kleiner als Vortexgeneratorelemente an der dritten Position und diese wiederum kleiner als die Vortexgeneratorelemente an erster Position.

Durch die kleiner ausgestalteten Vortexgeneratorelemente an zweiter Position wird die Wirbelgenerierung verstärkt, sodass bei abgelöster Strömung die strömungsstabilisierende Wirkung im Bereich des Druckanstiegs früher eintreten kann. Die größere Ausgestaltung der Vortexgeneratorelemente an erster Position begünstigt die Erhaltung eines größtmöglichen Teils an laminarer Strömung.

Des Weiteren berücksichtigt die kleinere Ausführung der Vortexgeneratorelemente an zweiter Position die dünnere Grenzschicht an der zweiten, weiter stromauf liegenden Position. So kann die aerodynamische Güte einer solchen Blattsektion im Vergleich zur Anordnung gleich großer Vortexgeneratorelemente an erster und zweiter Position deutlich verbessert werden.

Gemäß einer weiteren vorteilhaften Ausführungsform des dritten Aspekts der Erfindung, beträgt der zweite Abstand mindestens 10 % der Rotorblattprofiltiefe.

Ein zweiter Abstand von mindestens 10 % der Rotorblattprofiltiefe stellt sicher, dass die an zweiter Position angeordneten Vortexgeneratorelemente auch ihre vorgesehene Wirkung entfalten können und Wirbel über die Saugseite des Rotorblatts erzeugen, die zur Stabilisierung der Strömung im Bereich des Druckanstiegs bei abgelöster Strömung beitragen. Bevorzugt beträgt der zweite Abstand mindestens 15 % der Rotorblattprofiltiefe, besonders bevorzugt mindestens 20 % der Rotorblattprofiltiefe.

Gemäß einer weiteren vorteilhaften Ausführungsform des dritten Aspekts der Erfindung, beträgt der erste Abstand mindestens 15 % der Rotorblattprofiltiefe.

Ein erster Abstand von mindestens 15 % der Rotorblattprofiltiefe stellt sicher, dass laminare Strömung über einen möglichst großen Teil der Saugseite in Rotorblattprofiltiefenrichtung erhalten bleibt. Bevorzugt beträgt der erste Abstand mindestens 20 % der Rotorblattprofiltiefe, besonders bevorzugt mindestens 30 % der Rotorblattprofiltiefe.

Gemäß einem vierten Aspekt der Erfindung, wird ein Rotorblatt für eine Windenergieanlage bereitgestellt, wobei sich das Rotorblatt von einer Rotorblattwurzel zu einer Rotorblattspitze mit einer Rotorblattlänge in Rotorblattlängsrichtung erstreckt, eine sich zwischen einer Rotorblattvorderkante und einer Rotorblatthinterkante in Rotorblattprofiltiefenrichtung erstreckende Rotorblattprofiltiefe aufweist und eine Saugseite und eine Druckseite aufweist, wobei Vortexgeneratorelemente einer ersten Größe und Vortexgeneratorelemente einer zweiten Größe mit einem Abstand zur Rotorblattvorderkante über wenigstens einen Bereich des Rotorblattes in Rotorblattlängsrichtung angeordnet sind, wobei in Rotorblattlängsrichtung die Vortexgeneratorelemente der ersten Größe und die Vortexgeneratorelemente der zweiten Größe abwechselnd angeordnet sind, sodass auf ein Vortexgeneratorelement der ersten Größe ein Vortexgeneratorelement der zweiten Größe folgt und auf ein Vortexgeneratorelement der zweiten Größe ein Vortexgeneratorelement der ersten Größe folgt.

Eine abwechselnde Anordnung von Vortexgeneratorelementen einer ersten Größe und Vortexgeneratorelementen einer zweiten Größe wirkt der Hysterese derart entgegen, dass die Vortexgeneratorelemente der kleineren der ersten Größe und der zweiten Größe bei abgelöster Strömung eine strömungsstabilisierende Wirkung im Bereich des Druckanstiegs erzeugen und die Vortexgeneratorelemente der größeren der ersten Größe und der zweiten Größe einen größtmöglichen Teil der laminaren Strömung erhalten. Bei Strömungsablösung legt die Strömung also bei abnehmender Variation des Blattanstellwinkels schneller wieder an, sodass der Auftrieb des Rotorblatts optimiert ist.

Gemäß einer vorteilhaften Ausführungsform des vierten Aspekts der Erfindung, beträgt der Abstand zur Rotorblattvorderkante mindestens 10 % der Rotorblattprofiltiefe.

Ein Abstand von mindestens 10 % der Rotorblattprofiltiefe stellt sicher, dass die Vortexgeneratorelemente der kleineren der ersten Größe und der zweiten Größe auch ihre vorgesehene Wirkung entfalten können und Wirbel über die Saugseite des Rotorblatts erzeugen, die zur Stabilisierung der Strömung im Bereich des Druckanstiegs bei abgelöster Strömung beitragen. Bevorzugt beträgt der Abstand mindestens 15 % der Rotorblattprofiltiefe, besonders bevorzugt mindestens 20 % der Rotorblattprofiltiefe.

Gemäß einer weiteren vorteilhaften Ausführungsform des dritten oder vierten Aspekts der Erfindung, umfassen die Vortexgeneratorelemente je ein Paar für eine aerodynamische Wirksamkeit des Vortexgeneratorelements zusammengehörige Vortexgeneratoren auf einer Sockelplatte pro Vortexgeneratorelement.

Insbesondere weisen beide Vortexgeneratoren des Paars zusammengehöriger Vortexgeneratoren eine längliche Ausgestaltung auf. Bevorzugt sind die beiden Vortexgeneratoren derart auf der Sockelplatte angeordnet, dass die länglichen Ausgestaltungen der beiden Vortexgeneratoren nicht parallel ausgerichtet sind. Besonders bevorzugt sind die beiden Vortexgeneratoren derart auf der Sockelplatte angeordnet, dass bei einer erfindungsgemäßen Anordnung auf der Saugseite des Rotorblatts die längliche Ausgestaltung der Vortexgeneratoren in im Wesentlichen Rotorblattprofiltiefenrichtung ausgerichtet ist.

In einem bevorzugten Beispiel sind die Proportionen der beiden Vortexgeneratoren zueinander und insbesondere auch zur Sockelplatte für jedes Vortexgeneratorelement konstant, auch wenn sich die absolute Größe der Vortexgeneratorelemente untereinander unterscheidet.

Gemäß einer weiteren vorteilhaften Ausführungsform des dritten oder vierten Aspekts der Erfindung, weist das Rotorblatt senkrecht zur Rotorblattprofiltiefe und senkrecht zur Rotorblattlängsrichtung eine Rotorblattdicke auf, gibt eine relative Dicke das Verhältnis von Rotorblattdicke zu Rotorblattprofiltiefe an, und handelt es sich bei dem Bereich des Rotorblattes um einen Bereich des Rotorblattes, an dem das Rotorblatt eine relative Dicke von mindestens 20 % aufweist.

Es ist eine Erkenntnis der Erfindung, dass Bereiche des Rotorblattes mit einer relativen Dicke von über 20 % besonders anfällig für die negativen Effekte von Hysteresen sind. Gerade in diesen dicken Bereichen ist der technische Effekt, den die Erfindung bereitstellt, besonders wirksam.

Bevorzugt handelt es sich bei dem Bereich des Rotorblatts um einen Bereich des Rotorblatts, an dem das Rotorblatt eine relative Dicke von mindestens 25 %, besonders bevorzugt mindestens 30 % aufweist.

Gemäß einem fünften Aspekt der Erfindung, wird eine Windenergieanlage umfassend mindestens ein Rotorblatt nach dem dritten oder vierten Aspekt der Erfindung bereitgestellt.

Gemäß einem sechsten Aspekt der Erfindung, wird ein Windpark umfassend mehrere Windenergieanlagen nach dem fünften Aspekt der Erfindung bereitgestellt.

Im Folgenden wird die vorliegende Erfindung anhand von in den Figuren dargestellten Ausführungsbeispielen weiter illustriert und erläutert. Hierbei zeigt
- Fig. 1: eine schematische Darstellung einer Windenergieanlage,
- Fig. 2: eine schematische Darstellung eines Windparks,
- Fig. 3: eine schematische Darstellung des Hystereseeffekts in einem Blattanstellwinkel-Auftriebskoeffizient-Diagramm,
- Fig. 4: eine schematische Darstellung einer Druckverteilung in Rotorblattprofiltiefenrichtung über ein Rotorblattprofil,
- Fig. 5: eine schematische Darstellung der Auswirkungen von Vortexgeneratorelementen an erster Position auf den Hystereseeffekt in einem Blattanstellwinkel-Auftriebskoeffizient-Diagramm,
- Fig. 6: eine schematische Darstellung der Auswirkungen von Vortexgeneratorelementen an zweiter Position auf den Hystereseeffekt in einem Blattanstellwinkel-Auftriebskoeffizient-Diagramm,
- Fig. 7: eine schematische Darstellung der Anordnung von Vortexgeneratoren an einem Rotorblatt,
- Fig. 8: eine schematische Darstellung eines ersten Ausführungsbeispiels eines Aspekts der Erfindung,
- Fig. 9: eine schematische Darstellung eines zweiten Ausführungsbeispiels eines Aspekts der Erfindung,
- Fig. 10: eine schematische Darstellung eines dritten Ausführungsbeispiels eines Aspekts der Erfindung,
- Fig. 11: eine schematische Darstellung eines vierten Ausführungsbeispiels eines Aspekts der Erfindung,
- Fig. 12: eine schematische Darstellung eines fünften Ausführungsbeispiels eines Aspekts der Erfindung,
- Fig. 13: eine schematische Darstellung eines sechsten Ausführungsbeispiels eines Aspekts der Erfindung,
- Fig. 14: ein schematisches Ablaufdiagramm eines Ausführungsbeispiels eines Aspekts der Erfindung.

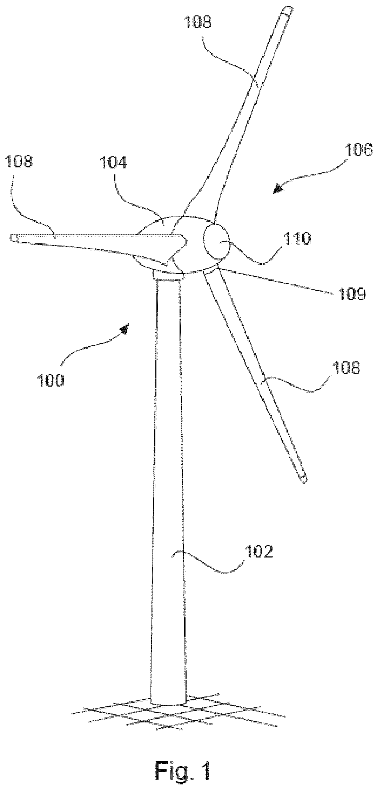

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

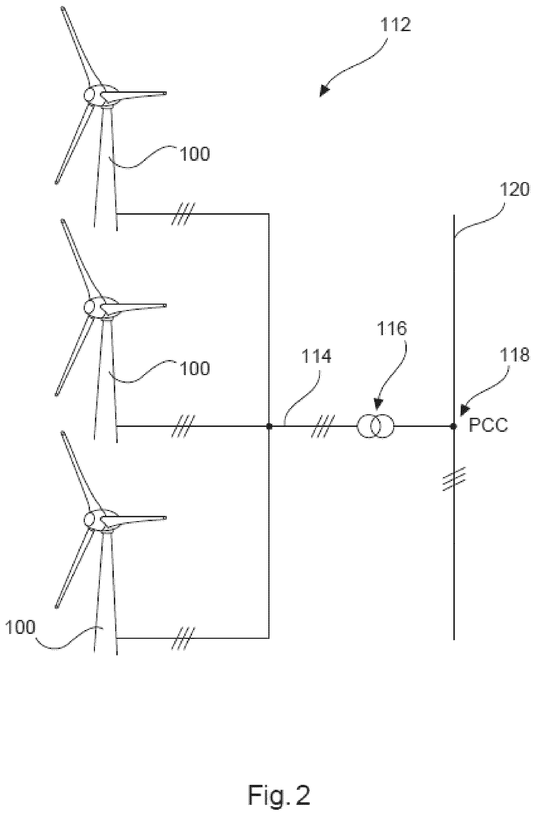

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergie-anlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

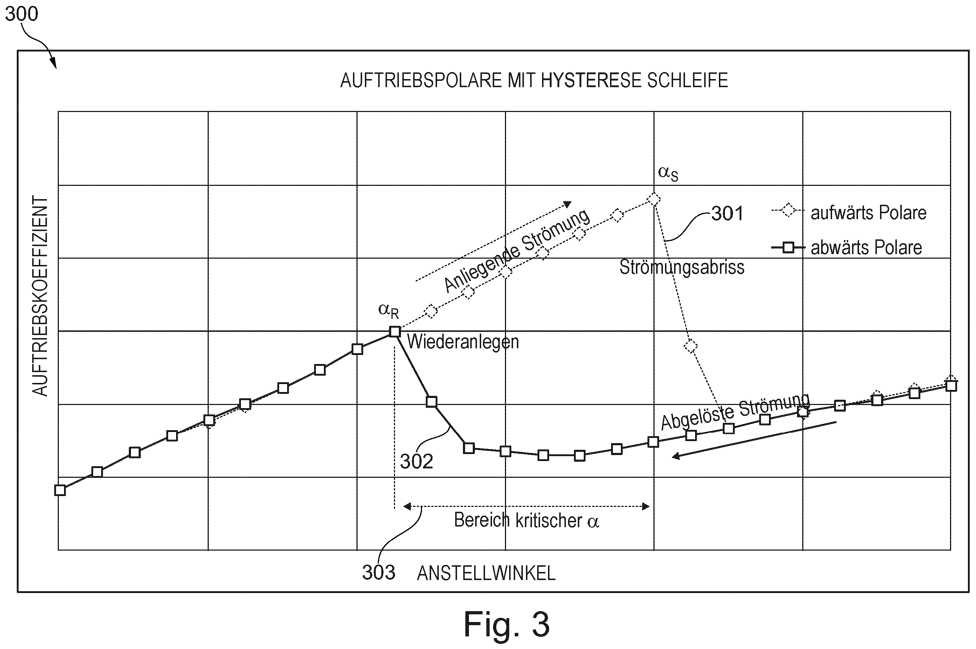

Figur 3 zeigt eine schematische Darstellung des Hystereseeffekts an einem Rotorblatt einer Windenergieanlage, wobei an dem Rotorblatt keine Vortexgeneratoren angebracht sind, in einem Blattanstellwinkel-Auftriebskoeffizient-Diagramm 300. Abgebildet ist der Verlauf einer aerodynamischen Polare in einem aufwärts gerichteten Teil 301 sowie in einem abwärts gerichteten Teil 302. Der aufwärts gerichteter Teil 301 der aerodynamischen Polare ist als aufwärts Polare benannt, der abwärts gerichtete Teil 302 der aerodynamischen Polare als abwärts Polare. Figur 3 zeigt den Effekt einer an einem Rotorblatt auftretenden Hysterese. Die Strömung löst bei Veränderung des Anstellwinkels in Richtung höhere Anstellwinkel bei einem größeren Anstellwinkel ab, als sie bei der Veränderung des Anstellwinkels in Richtung kleinerer Anstellwinkel wieder anlegt. Der Effekt der Hysterese ist in Figur 3 am Beispiel einer Auftriebspolare dargestellt. Der Winkel α_{S}, bei dem im aufwärts gerichteten Teil erstmals die Strömungsablösung auftritt, ist dabei immer größer als der Winkel α_{R}, bei dem sich die Strömung im abwärts gerichteten Teil der Polare wieder anlegt.

An Windkraftanlagen können unter besonderen Umständen (hohe Turbulenz, starke Scherung der Anströmung, stark drehzahlreduzierter Betrieb, Raureifansatz u. A.) Situationen auftreten, bei denen einzelne Teile des Rotorblattes kurzzeitig in der Strömungsablösung betrieben werden. Für die Verwendung eines solchen Profils an einer Windkraftanlage bedeutet das, das nach dem Auftreten einer Strömungsablösung bei einem hohen kritischen Anstellwinkel erst ein deutlich reduzierter Betriebsanstellwinkel, der kleiner ist als der kleinste kritische Anstellwinkel, anliegen muss, damit sich die Strömung wieder an das Rotorblatt anlegt. Dieses Verhalten ist unerwünscht, da es bedeuten kann, dass eine Windkraftanlage längere Zeit im abgelösten Betriebszustand läuft, welcher für die Energieerzeugung nicht optimal ist. Hystereseeffekte sind also unerwünscht, daher stellt die Erfindung Lösungen bereit, die Eigenschaft der Hysteresebildung in der aerodynamischen Polare eines Profils möglichst zu unterbinden.

Die Figur 3 zeigt ebenfalls den Bereich des kritischen Blattanstellwinkels 303. Dieser ist als die Menge aller Blattanstellwinkel zwischen dem Winkel α_{S} und dem Winkel α_{R} definiert.

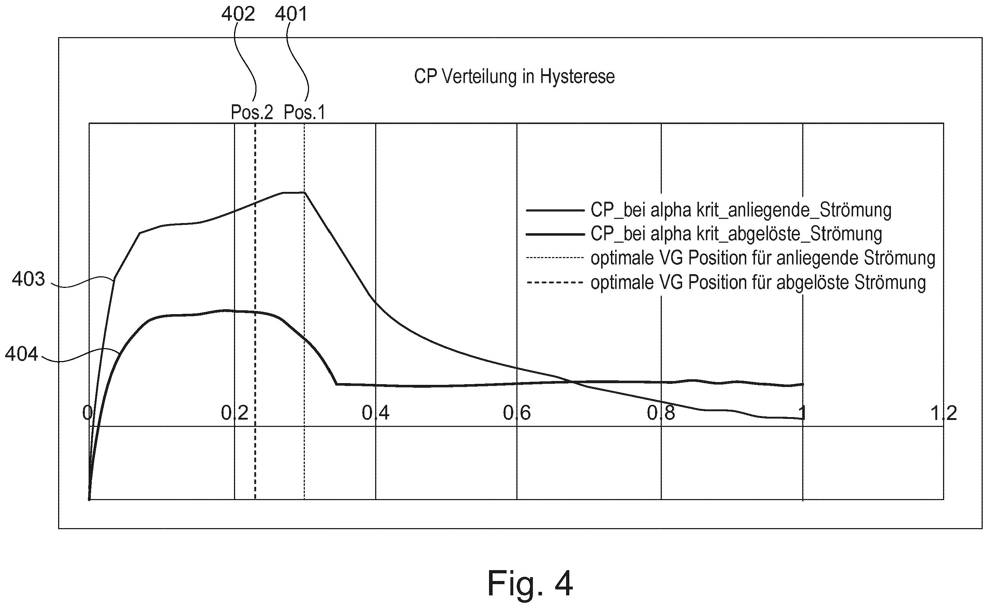

Figur 4 eine schematische Darstellung einer Druckverteilung in Rotorblattprofiltiefenrichtung über ein Rotorblattprofil eines Rotorblatts, an dem keine Vortexgeneratoren angebracht sind. Figur 4 zeigt zwei Druckverteilungen auf der Saugseite eines angeströmten Profils eines Rotorblatts bei dem gleichen kritischen Anstellwinkel α_{crit}, wobei α_{R} < α_{crit} ≤ α_{S}. Die Kurve 403 zeigt die Druckverteilung bei anliegender Strömung im aufwärts gerichteten Teil der Polare, die Kurve 404 die Druckverteilung bei gleichem Anstellwinkel bei abgelöster Strömung im abwärts gerichteten Teil der Polare. Man erkennt, dass der Hauptdruckanstieg der Kurve 403 deutlich weiter hinten liegt (hinter 30% der Profiltiefe des Profils) als der, der Kurve 404 (schon ab ca. 22% der Profiltiefe). Eine wirksame Maßnahme zur Erhaltung des anliegenden Strömungszustandes wäre die Verwendung von Vortexgeneratoren im Bereich vor dem kritischen Druckanstieg. Diese Vortexgeneratoren können durch die Vermischung der durch Oberflächenreibung energieärmeren Profilgrenzschlicht mit energiereicher Strömung von außerhalb der Grenzschicht Energie zuführen. Die so mit Energie angereicherte Strömung ist dann in der Lage größere negative Druckgradienten zu überwinden. Als Folge legt sich die Strömung wieder an das Profil an. Grundvoraussetzung für die Wirksamkeit von Vortexgeneratoren ist deren für den jeweiligen Einsatzzweck richtige Positionierung auf der Profiloberfläche.

Eine mögliche Position von Vortexgeneratoren ist die vor dem kritischen Druckanstieg bei dem größtmöglichen Anstellwinkel, bei dem die Strömung noch anliegt, also dem letztmöglichen Anstellwinkel vor der Strömungsablösung (erstes Maximum 401 in Fig. 4). Auf diese Weise bleibt die größtmögliche laminare Lauflänge der Grenzschichtströmung bis zum Vortexgenerator vollständig erhalten. Der Vortexgenerator kann seine die Grenzschicht stabilisierende Wirkung bei größeren Anstellwinkeln aber optimal entfalten. Auf diese Weise wird ein optimales Verhältnis von Auftrieb zu Widerstand in einem breiten Betriebsanstellwinkelbereich erreicht.

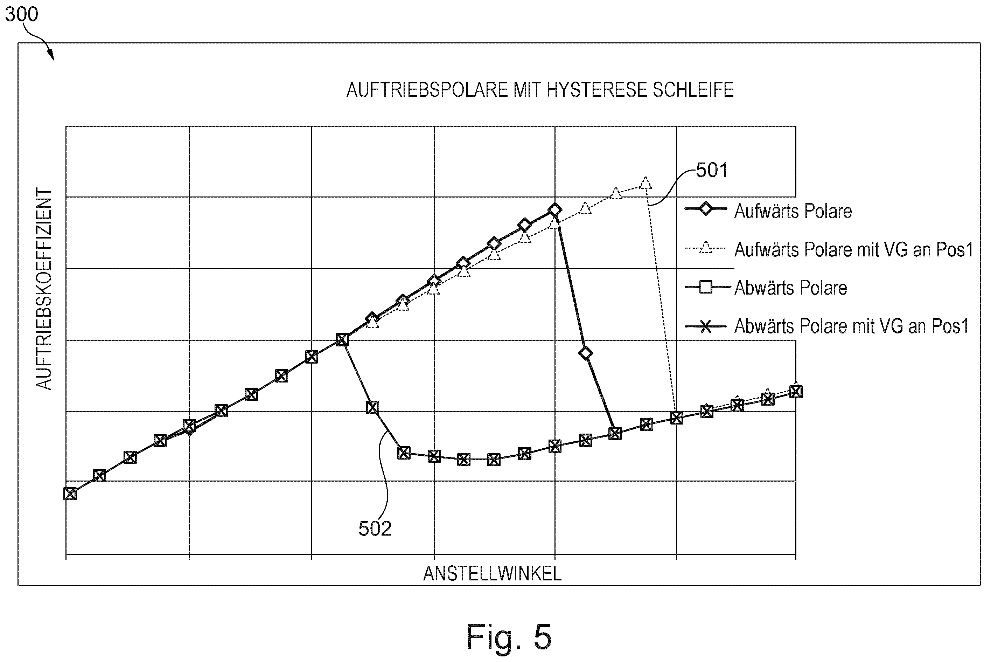

Für den Fall der abgelösten Strömung kann diese Vorgehen jedoch zu Problemen führen. Bei Profilen, die zu Stallhysteresen neigen, kann es passieren, dass Vortexgeneratoren bei einer Strömungsablösung ihre Wirkung nicht oder nicht optimal entfalten können, weil sie in einem Bereich angebracht sind, der bei Strömungsablösung deutlich hinter dem Bereich des beginnenden Druckanstieges liegt. Dadurch kann zwar in der aufwärtsgerichteten Polare die Strömung länger anliegen, in der abwärts gerichteten Polare, die aus dem Stall heraus gemessen wird, würde sich jedoch keine nennenswerte Verbesserung einstellen, siehe auch Fig. 5.

Figur 5 zeigt eine schematische Darstellung der Auswirkungen von Vortexgeneratorelementen an erster Position auf den Hystereseeffekt in einem Blattanstellwinkel-Auftriebskoeffizient-Diagramm 300. Beim aufwärts gerichteten Teil 501 der Auftriebspolaren mit Vortexgeneratorelementen an erster Position tritt Strömungsablösung bei einem deutlich höheren Blattanstellwinkel ein, als beim aufwärts gerichteten Teil der Auftriebspolaren ohne Vortexgeneratoren. Demnach verbessern Vortexgeneratoren an erster Position die aerodynamischen Eigenschaften des Rotorblatts, da durch den höheren kritischen Blattanstellwinkel mehr Auftrieb aus dem Wind generiert werden kann. Hinsichtlich des abwärts gerichteten Teils 502 der Auftriebspolare mit Vortexgeneratorelementen an erster Position tritt keine Veränderung gegenüber einem abwärts gerichteten Teil ohne Vortexgeneratorelementen an erster Position ein, da wie aus Figur 4 zu entnehmen, die Vortexgeneratorelemente in einem Bereich des Rotorblatts angebracht sind, indem ein Druckanstieg zu verzeichnen ist, sodass die Vortexgeneratorelemente nicht ihre volle Wirkung entfalten können.

Eine auf einer Erkenntnis der Erfindung basierende Gegenmaßnahme ist in diesem Fall, die Vortexgeneratoren weiter vorne am Profil anzubringen und zwar an der Position oder vor der Position des beginnenden Druckanstieges bei abgelöster Strömung (zweites Maximum 402 in Fig. 4). Dadurch ist der Vortexgenerator auch bei potentiell abgelöster Strömung wirksam und bringt die Strömung dazu, sich wieder anzulegen. Eine Stall-Hysterese wird wirksam verhindert.

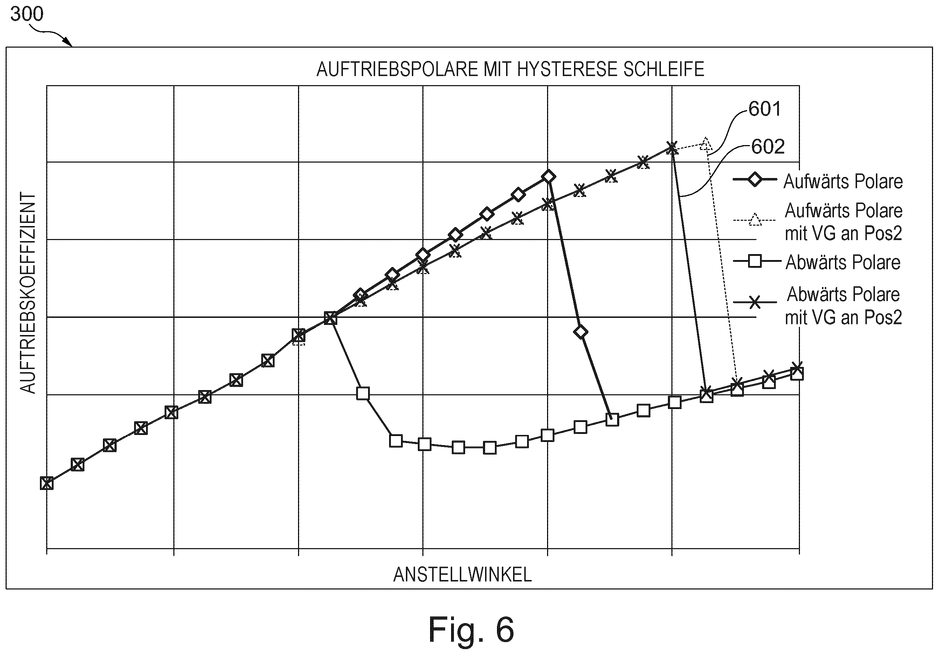

Ein Nachteil dieses Vorgehens ist aber eine signifikante Reduktion des Anteils von laminarer Strömung (laminare Strömung wird bei Interaktion mit einem Vortexgenerator in der Regel turbulent). Da laminare Strömung das Profil reibungsärmer umströmt als vollturbulente Strömung, führt dies zu einem Widerstandsanstieg. Eine Grenzschicht an einem Profil mit früherer Transition ist darüber hinaus dicker als eine Grenzschicht am gleichen Profil bei der die Transition erst später erfolgt. Die Aufdickung der Grenzschicht führt zu einer effektiven Entwölbung der betroffenen Profilsektion und reduziert deren Auftrieb. Die beiden genannten Effekte Widerstandsanstieg und Auftriebsreduktion reduzieren im Resultat deutlich die Gleitleistung der Profilsektion. Das Auftriebsverhalten dieses Ansatzes ist in Figur 6 dargestellt.

Figur 6 zeigt eine schematische Darstellung der Auswirkungen von Vortexgeneratorelementen an zweiter Position auf den Hystereseeffekt in einem Blattanstellwinkel-Auftriebskoeffizient-Diagramm 300. Beim aufwärts gerichteten Teil 601 der Auftriebspolaren mit Vortexgeneratorelementen an zweiter Position tritt Strömungsablösung bei einem deutlich höheren Blattanstellwinkel ein, als beim aufwärts gerichteten Teil der Auftriebspolaren ohne Vortexgeneratoren. Hinsichtlich des abwärts gerichteten Teils 602 der Auftriebspolare mit Vortexgeneratorelementen an zweiter Position ist ebenfalls der Blattanstellwinkel ab dem Strömungsablösung auftritt deutlich erhöht als bei dem abwärts gerichteten Teil ohne Vortexgeneratoren an zweiter Position. Demnach verbessern Vortexgeneratoren an zweiter Position die aerodynamischen Eigenschaften des Rotorblatts, da durch den höheren kritischen Blattanstellwinkel mehr Auftrieb aus dem Wind generiert werden kann.

Daher beruht die Erfindung auf der Erkenntnis eine Lösung zu finden, bei der zwar die strömungsstabilisierende Wirkung im Bereich des Druckanstieges bei abgelöster Strömung erreicht werden kann, aber gleichzeitig ein größtmöglicher Teil an laminarer Strömung erhalten bleibt. Einige solcher Möglichkeiten sind als Ausführungsbeispiele der Aspekte der Erfindung im Folgenden dargestellt.

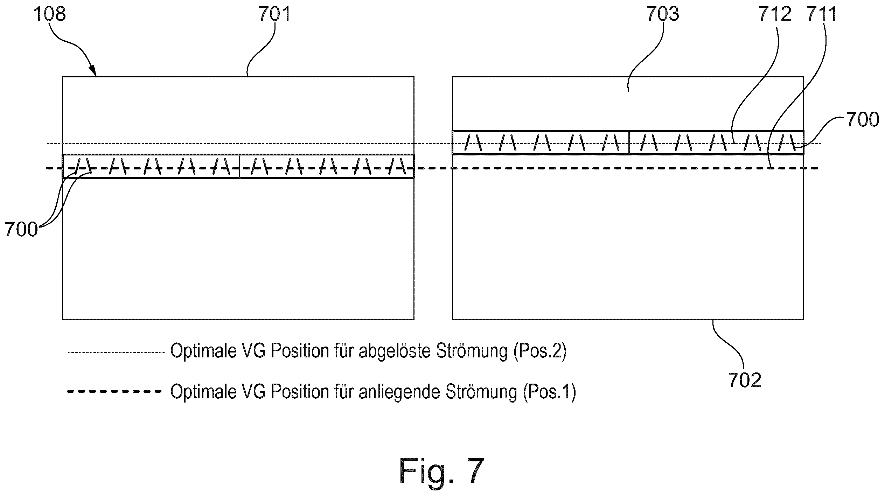

Figur 7 zeigt eine schematische Darstellung der Anordnung von Vortexgeneratoren 700 an einem Rotorblatt 108. Gezeigt ist die Saugseite 703 eines Rotorblatts 108 von Rotorblattvorderkante 701 bis Rotorblatthinterkante 702. Die fett gestrichelte Linie stellt die erste Position 711 dar, die dünn gestrichelte Linie die zweite Position 712. In Figur 7 sind mehrere Vortexgeneratoren 700 in Paaren auf einer Sockelplatte angeordnet. Daher handelt es sich hierbei nicht um Vortexgeneratorelemente im Sinne der Erfindung.

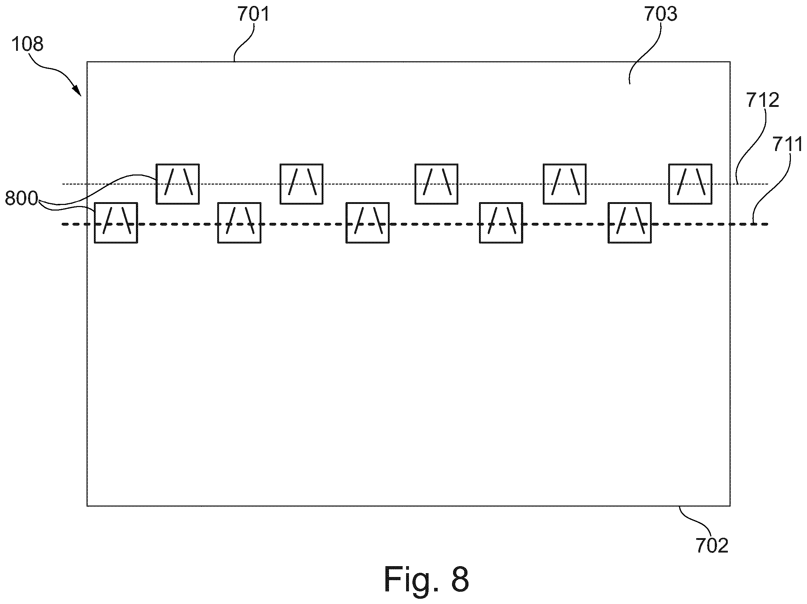

Figur 8 zeigt eine schematische Darstellung eines ersten Ausführungsbeispiels eines Aspekts der Erfindung, nämlich ein Rotorblatt 108 mit angeordneten Vortexgeneratorelementen 800 an der ersten Position 711 und an der zweiten Position 712. In dem gezeigten Ausführungsbeispiel sind die Vortexgeneratorelemente 800 stufenweise angeordnet. Bei dieser Form der Anordnung wird im Wechsel immer ein Vortexgeneratorelement auf erster Position und ein Vortexgeneratorelement auf zweiter Position angebracht. Diese stufenweise Anordnung ermöglicht eine wirksame Verringerung der Stall-Hysterese, und erhält mehr laminare Lauflänge, als wenn alle Vortexgeneratorelemente auf zweiter Position montiert wären.

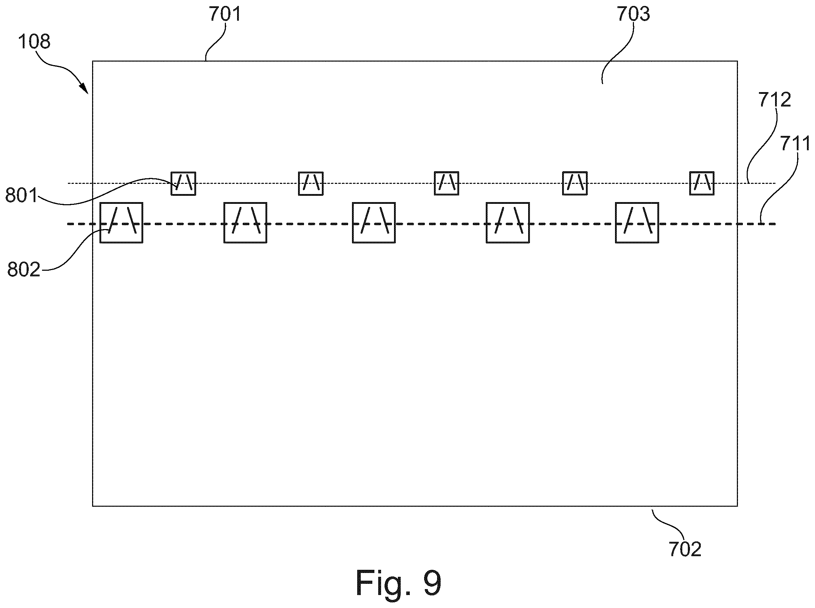

Figur 9 zeigt eine schematische Darstellung eines zweiten Ausführungsbeispiels eines Aspekts der Erfindung, nämlich ein Rotorblatt 108 mit angeordneten Vortexgeneratorelementen 801, 802 an der ersten Position 711 und an der zweiten Position 712. Hierbei handelt es sich um eine optimierte Variante der Lösung aus Figur 8, da die im Vergleich zur ersten Position 711 dünnere Grenzschicht an der zweiten Position 712 berücksichtigt wird. Die an der zweiten Position 712 montierten Vortexgeneratorelemente 801 sind kleiner ausgestaltet als die Vortexgeneratorelemente 802 an der ersten Position 711. Die daraus resultierende Widerstandsreduktion wirkt sich positiv auf die Gleitleistung aus. In diesem Ausführungsbeispiel sind überdies die Vortexgeneratorelemente 801, 802 in Rotorblattlängsrichtung mit einem konstanten Abstand voneinander beabstandet.

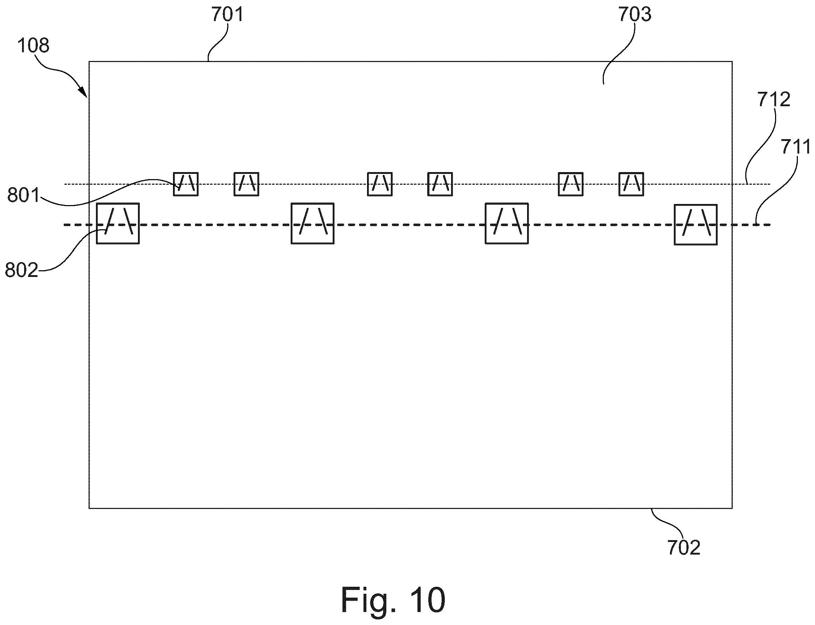

Figur 10 zeigt eine schematische Darstellung eines dritten Ausführungsbeispiels eines Aspekts der Erfindung, nämlich ein Rotorblatt 108 mit angeordneten kleineren Vortexgeneratorelementen 801 an der zweiten Position 712 und angeordneten größeren Vortexgeneratorelemente 802 an der ersten Position 711. Das in Figur 10 dargestellte Ausführungsbeispiel stellt eine Variation des Ausführungsbeispiels aus Figur 9 dar, bei der in Rotorblattlängsrichtung auf ein größeres Vortexgeneratorelement 802 an erster Position 711 jeweils zwei kleinere Vortexgeneratorelemente 801 an zweiter Position 712 folgen. Durch diese Anordnung ist eine noch robustere Auslegung gegen Stallhysteresen möglich. Wird der Schwerpunkt auf mehr Gleitleistung gelegt, und kann gegebenenfalls eine leichte Stall-Hysterese toleriert werden, kann auch eine Anordnung gewählt werden, bei der auf ein kleineres Vortexgeneratorelement 801 an zweiter Position 712 jeweils zwei größere Vortexgeneratorelemente 802 an erster Position 711 folgen.

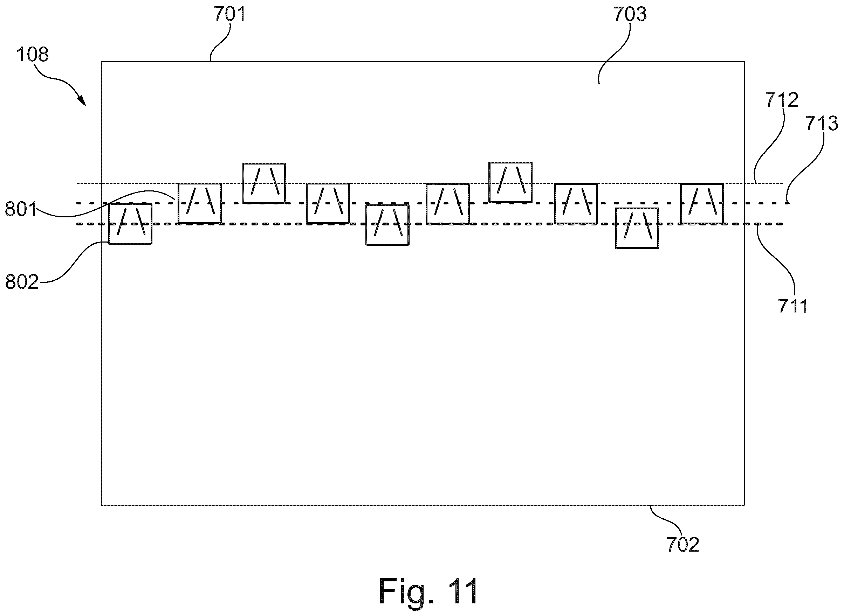

Figur 11 zeigt eine schematische Darstellung eines vierten Ausführungsbeispiels eines Aspekts der Erfindung, nämlich ein Rotorblatt 108 mit angeordneten Vortexgeneratorelementen 800 an der ersten Position 711, an der zweiten Position 712 und an der dritten Position 713. Die dritte Position 713 liegt in diesem Ausführungsbeispiel in der Mitte zwischen der ersten Position 711 und der zweiten Position 712.

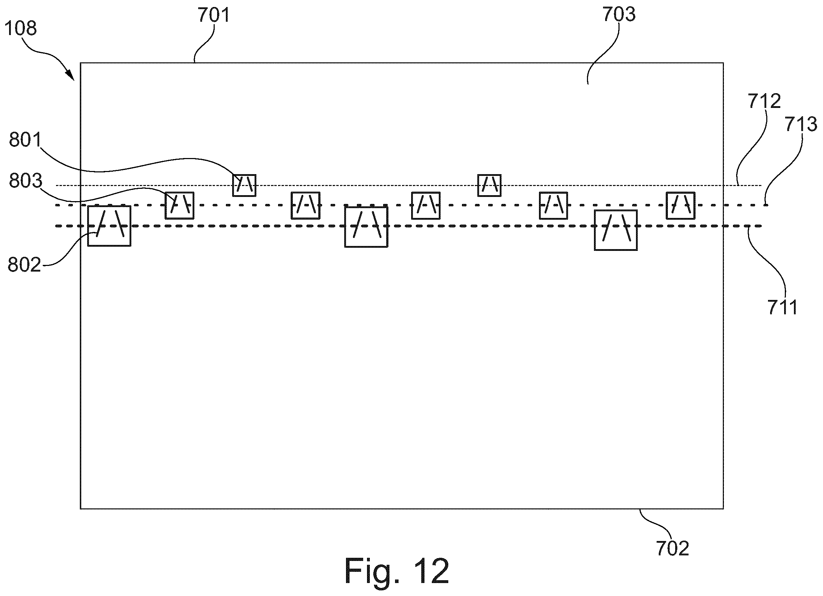

Figur 12 zeigt eine schematische Darstellung eines fünften Ausführungsbeispiels eines Aspekts der Erfindung, nämlich ein Rotorblatt 108 mit angeordneten kleineren Vortexgeneratorelementen 801 an der zweiten Position 712, angeordneten größeren Vortexgeneratorelemente 802 an der ersten Position 711 und angeordneten mittleren Vortexgeneratorelementen 803 an der dritten Position 713. Die mittleren Vortexgeneratorelemente 803 sind größer als die kleineren Vortexgeneratorelemente 801 und kleiner als die größeren Vortexgeneratorelemente 802 ausgestaltet. Figur 12 zeigt eine Variante des Ausführungsbeispiels aus Figur 11, die zusätzlich die dünnere Grenzschicht an den weiter stromauf liegenden Positionen berücksichtigt. Bei dieser Variante werden die stromauf liegenden Vortexgeneratorelemente entsprechend kleiner ausgeführt. So kann die aerodynamische Güte einer solchen Blattsektion im Vergleich zu der Version aus Figur 11 deutlich verbessert werden. In diesem Ausführungsbeispiel sind die Vortexgeneratorelemente in Rotorblattlängsrichtung in einer Zick-Zack Anordnung angebracht, sodass keine zwei aufeinander folgenden Vortexgeneratorelemente an der gleichen Position angeordnet sind. Es sind jedoch ebenfalls Hybridlösungen mit den vorigen Ausführungsbeispielen denkbar, insbesondere mit dem Ausführungsbeispiel aus Figur 10. Insbesondere ist denkbar, dass zwei oder mehrere aufeinander folgende Vortexgeneratorelemente an einer selben Position angeordnet sind.

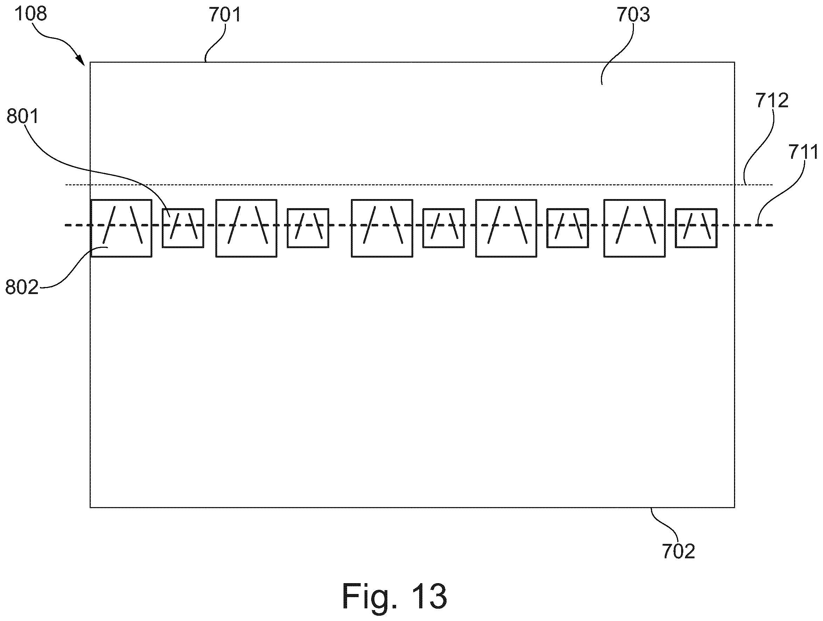

Figur 13 zeigt eine schematische Darstellung eines sechsten Ausführungsbeispiels eines Aspekts der Erfindung, nämlich ein Rotorblatt 108 mit angeordneten kleineren Vortexgeneratorelementen 801 und größeren Vortexgeneratorelemente 802 an der ersten Position 711. In diesem Ausführungsbeispiel sind dabei die kleineren Vortexgeneratorelementen 801 und größeren Vortexgeneratorelemente 802 in Rotorblattlängsrichtung abwechselnd angeordnet. Es ist jedoch auch denkbar zwei oder mehrere Vortexgeneratorelemente derselben Größe nacheinander anzuordnen. Durch eine Anordnung gemäß diesem Ausführungsbeispiel wird ebenfalls eine Verringerung der Hysterese erzielt, auch wenn der Effekt geringer ausfällt als bei einer erfindungsgemäßen Anordnung von Vortexgeneratoren an zwei oder mehreren verschiedenen Positionen in Rotorblattprofiltiefenrichtung.

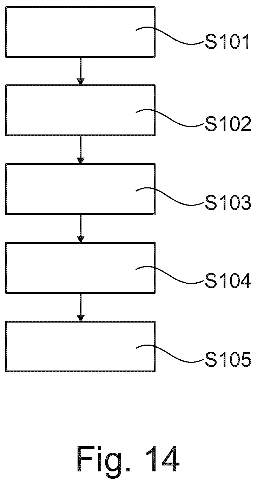

Figur 14 zeigt ein schematisches Ablaufdiagramm eines Ausführungsbeispiels eines Aspekts der Erfindung. Das Ablaufdiagramm zeigt ein erfindungsgemäßes Verfahren umfassend die Schritte: Ermitteln S101 eines Maximums einer Druckverteilungs-Kurve, die eine mit negativem Vorzeichen aufgetragene Druckverteilung entlang des Rotorblattprofils in Rotorblattprofiltiefenrichtung auf einen Bereich des Rotorblatts bei einem kritischen Anstellwinkel in einem aufwärts gerichteten Teil einer aerodynamischen Polare des Rotorblattprofils angibt, als erstes Maximum, Ermitteln S102 eines Maximums einer Druckverteilungs-Kurve, die eine mit negativem Vorzeichen aufgetragene Druckverteilung entlang des Rotorblattprofils in Rotorblattprofiltiefenrichtung auf den Bereich des Rotorblatts bei dem kritischen Anstellwinkel in einem abwärts gerichteten Teil der aerodynamischen Polare des Rotorblattprofils angibt, als zweites Maximum, Bestimmen S103 einer ersten Position auf der Saugseite des Rotorblattes mit einem ersten Abstand zur Rotorblattvorderkante über wenigstens den Bereich des Rotorblattes in Rotorblattlängsrichtung anhand des ersten Maximums, Bestimmen S104 einer zweiten Position auf der Saugseite des Rotorblattes mit einem zweiten Abstand zur Rotorblattvorderkante über wenigstens den Bereich des Rotorblattes in Rotorblattlängsrichtung anhand des zweiten Maximums, wobei der zweite Abstand kleiner ist als der erste Abstand, und Anordnen S105 von Vortexgeneratorelementen an der ersten Position und an der zweiten Position.

### Bezugszeichen

- 100: Windenergieanlage
- 102: Turm
- 104: Gondel
- 106: Rotor
- 108: Rotorblatt
- 109: Rotorblattwurzel
- 110: Spinner
- 112: Windpark
- 114: Parknetz
- 116: Transformator
- 118: Einspeisepunkt
- 120: Versorgungsnetz
- 300: Blattanstellwinkel-Auftriebskoeffizient-Diagramm
- 301: aufwärts gerichteter Teil einer aerodynamischen Polare
- 302: abwärts gerichteter Teil einer aerodynamischen Polare
- 303: Bereich des kritischen Anstellwinkels
- 401: erstes Maximum
- 402: zweites Maximum
- 403, 404: Druckverteilungskurve
- 501: aufwärts gerichteter Teil einer aerodynamischen Polare mit Vortexgeneratorelementen an erster Position
- 502: abwärts gerichteter Teil einer aerodynamischen Polare mit Vortexgeneratorelementen an erster Position
- 601: aufwärts gerichteter Teil einer aerodynamischen Polare mit Vortexgeneratorelementen an zweiter Position
- 602: abwärts gerichteter Teil einer aerodynamischen Polare mit Vortexgeneratorelementen an zweiter Position
- 700: Vortexgenerator
- 701: Rotorblattvorderkante
- 702: Rotorblatthinterkante
- 703: Saugseite
- 711: erste Position
- 712: zweite Position
- 800: Vortexgeneratorelement
- 801: kleineres Vortexgeneratorelement
- 802: größeres Vortexgeneratorelement
- 803: mittleres Vortexgeneratorelement

## Patentansprüche

1. Verfahren zum Anordnen von Vortexgeneratorelementen an einem Rotorblatt für eine Windenergieanlage, wobei sich das Rotorblatt von einer Rotorblattwurzel zu einer Rotorblattspitze mit einer Rotorblattlänge in Rotorblattlängsrichtung erstreckt, ein sich zwischen einer Rotorblattvorderkante und einer Rotorblatthinterkante in Rotorblattprofiltiefenrichtung erstreckendes Rotorblattprofil mit einer Rotorblattprofiltiefe aufweist und eine Saugseite und eine Druckseite aufweist, umfassend folgende Schritte:
Ermitteln eines Maximums einer Druckverteilungs-Kurve, die eine mit negativem Vorzeichen aufgetragene Druckverteilung entlang des Rotorblattprofils in Rotorblattprofiltiefenrichtung auf einen Bereich des Rotorblatts bei einem kritischen Anstellwinkel in einem aufwärts gerichteten Teil einer aerodynamischen Polare des Rotorblattprofils angibt, als erstes Maximum,
Ermitteln eines Maximums einer Druckverteilungs-Kurve, die eine mit negativem Vorzeichen aufgetragene Druckverteilung entlang des Rotorblattprofils in Rotorblattprofiltiefenrichtung auf den Bereich des Rotorblatts bei dem kritischen Anstellwinkel in einem abwärts gerichteten Teil der aerodynamischen Polare des Rotorblattprofils angibt, als zweites Maximum,
Bestimmen einer ersten Position auf der Saugseite des Rotorblattes mit einem ersten Abstand zur Rotorblattvorderkante über wenigstens den Bereich des Rotorblattes in Rotorblattlängsrichtung anhand des ersten Maximums,
Bestimmen einer zweiten Position auf der Saugseite des Rotorblattes mit einem zweiten Abstand zur Rotorblattvorderkante über wenigstens den Bereich des Rotorblattes in Rotorblattlängsrichtung anhand des zweiten Maximums, wobei der zweite Abstand kleiner ist als der erste Abstand, und
Anordnen von Vortexgeneratorelementen an der ersten Position und an der zweiten Position.

2. Verfahren nach Anspruch 1, wobei der Schritt des Anordnens der Vortexgeneratorelemente ein Anordnen der Vortexgeneratorelemente umfasst, derart, dass in Rotorblattlängsrichtung von drei aufeinander folgenden Vortexgeneratorelementen maximal zwei Vortexgeneratorelemente an derselben der ersten Position oder der zweiten Position angeordnet sind, wobei aufeinander folgend sich auf eine Anordnung in Rotorblattlängsrichtung und insbesondere auf einen Abstand zur Rotorblattwurzel bezieht, und/oder
wobei der Schritt des Anordnens der Vortexgeneratorelemente ein Anordnen der Vortexgeneratorelemente umfasst, derart, dass in Rotorblattlängsrichtung zwei aufeinander folgende Vortexgeneratorelemente nicht an derselben der ersten Position oder der zweiten Position angeordnet sind.

3. Verfahren nach einem der vorstehenden Ansprüche, ferner umfassend:
Bestimmen einer dritten Position auf der Saugseite des Rotorblattes mit einem dritten Abstand zur Rotorblattvorderkante in Rotorblattlängsrichtung über wenigstens den Bereich des Rotorblattes, wobei der zweite Abstand kleiner als der dritte Abstand und der dritte Abstand kleiner als der erste Abstand ist,
Anordnen von Vortexgeneratorelementen an der dritten Position, derart, dass in Rotorblattlängsrichtung zwei aufeinander folgende Vortexgeneratorelemente nicht an derselben der ersten Position oder der zweiten Position angeordnet sind,
wobei der Schritt des Anordnens der Vortexgeneratorelemente insbesondere ein Anordnen der Vortexgeneratorelemente umfasst, derart, dass in Rotorblattlängsrichtung abwechselnd auf ein erstes an dritter Position angeordnetes Vortexgeneratorelement ein an erster Position angeordnetes Vortexgeneratorelement und auf ein zweites an dritter Position angeordnetes Vortexgeneratorelement ein an zweiter Position angeordnetes Vortexgeneratorelement folgt.

4. Verfahren nach einem der vorstehenden Ansprüche, wobei die Vortexgeneratorelemente eine von der Position an der sie angeordnet sind abhängige Größe aufweisen, wobei die Größe der Vortexgeneratorelemente insbesondere mit zunehmendem relativen Abstand zur Rotorblattvorderkante zunehmend ausgestaltet ist, wobei der relative Abstand zur Rotorblattvorderkante relativ zur Rotorblattprofiltiefe ausgestaltet ist.

5. Verfahren nach einem der vorstehenden Ansprüche, wobei der zweite Abstand mindestens 10 % der Rotorblattprofiltiefe beträgt, und/oder
wobei der erste Abstand mindestens 11 % der Rotorblattprofiltiefe beträgt, und/oder
wobei
der erste Abstand als erster konstanter relativer Wert der Rotorblattprofiltiefe ausgestaltet ist, und
der zweite Abstand als zweiter konstanter relativer Wert der Rotorblattprofiltiefe ausgestaltet ist,
wobei der zweite konstante relative Wert der Rotorblattprofiltiefe kleiner ist als der erste konstante relative Wert der Rotorblattprofiltiefe.

6. Verfahren zum Anordnen von Vortexgeneratorelementen an einem Rotorblatt für eine Windenergieanlage, wobei sich das Rotorblatt von einer Rotorblattwurzel zu einer Rotorblattspitze mit einer Rotorblattlänge in Rotorblattlängsrichtung erstreckt, ein sich zwischen einer Rotorblattvorderkante und einer Rotorblatthinterkante in Rotorblattprofiltiefenrichtung erstreckendes Rotorblattprofil mit einer Rotorblattprofiltiefe aufweist und eine Saugseite und eine Druckseite aufweist, umfassend folgende Schritte:
Ermitteln eines ersten Maximums einer Druckverteilungs-Kurve, die eine mit negativem Vorzeichen aufgetragene Druckverteilung entlang des Rotorblattprofils auf einen Bereich des Rotorblatts bei einem kritischen Anstellwinkel in einem aufwärts gerichteten Teil einer aerodynamischen Polare des Rotorblattprofils angibt,
Bestimmen einer ersten Position auf der Saugseite des Rotorblattes mit einem ersten Abstand zur Rotorblattvorderkante über wenigstens den Bereich des Rotorblattes in Rotorblattlängsrichtung anhand des ersten Maximums,
Anordnen von Vortexgeneratorelementen einer ersten Größe und Vortexgeneratorelementen einer zweiten Größe an der ersten Position über wenigstens den Bereich des Rotorblattes, derart, dass in Rotorblattlängsrichtung die Vortexgeneratorelemente der ersten Größe und die Vortexgeneratorelemente der zweiten Größe abwechselnd angeordnet sind, sodass auf ein Vortexgeneratorelement der ersten Größe ein Vortexgeneratorelement der zweiten Größe folgt und auf ein Vortexgeneratorelement der zweiten Größe ein Vortexgeneratorelement der ersten Größe folgt, wobei der Abstand zur Rotorblattvorderkante insbesondere mindestens 10 % der Rotorblattprofiltiefe beträgt.

7. Verfahren nach einem der vorstehenden Ansprüche, wobei die Vortexgeneratorelemente je ein Paar für eine aerodynamische Wirksamkeit des Vortexgeneratorelements zusammengehörige Vortexgeneratoren auf einer Sockelplatte pro Vortexgeneratorelement umfassen, und/oder
wobei
das Rotorblatt senkrecht zur Rotorblattprofiltiefenrichtung und senkrecht zur Rotorblattlängsrichtung eine Rotorblattdicke aufweist,
eine relative Dicke das Verhältnis von Rotorblattdicke zu Rotorblattprofiltiefe angibt, und
es sich bei dem Bereich des Rotorblattes um einen Bereich des Rotorblattes handelt, an dem das Rotorblatt eine relative Dicke von mindestens 20 % aufweist.

8. Rotorblatt für eine Windenergieanlage, wobei sich das Rotorblatt von einer Rotorblattwurzel zu einer Rotorblattspitze mit einer Rotorblattlänge in Rotorblattlängsrichtung erstreckt, eine sich zwischen einer Rotorblattvorderkante und einer Rotorblatthinterkante in Rotorblattprofiltiefenrichtung erstreckende Rotorblattprofiltiefe aufweist und eine Saugseite und eine Druckseite aufweist, wobei
die Saugseite Vortexgeneratorelemente aufweist,
eine erste Position auf der Saugseite des Rotorblattes mit einem ersten Abstand zur Rotorblattvorderkante in Rotorblattlängsrichtung über wenigstens einen Bereich des Rotorblattes definiert ist,
eine zweite Position auf der Saugseite des Rotorblattes mit einem zweiten Abstand zur Rotorblattvorderkante über wenigstens einen Bereich des Rotorblattes in Rotorblattlängsrichtung definiert ist,
der zweite Abstand kleiner ist als der erste Abstand, und
die Vortexgeneratorelemente an der ersten Position und an der zweiten Position angeordnet sind, derart, dass in Rotorblattlängsrichtung von drei aufeinander folgenden Vortexgeneratorelementen maximal zwei Vortexgeneratorelemente an derselben der ersten Position oder der zweiten Position angeordnet sind, wobei aufeinander folgend sich auf eine Anordnung in Rotorblattlängsrichtung und insbesondere auf einen Abstand zur Rotorblattwurzel bezieht.

9. Rotorblatt nach Anspruch 8, wobei in Rotorblattlängsrichtung zwei aufeinander folgende Vortexgeneratorelemente nicht an derselben der ersten Position oder der zweiten Position angeordnet sind, und/oder
wobei
eine dritte Position auf der Saugseite des Rotorblattes mit einem dritten Abstand zur Rotorblattvorderkante in Rotorblattlängsrichtung über wenigstens einen Bereich des Rotorblattes definiert ist,
der zweite Abstand kleiner als der dritte Abstand und der dritte Abstand kleiner als der erste Abstand ist,
Vortexgeneratorelemente an der dritten Position angeordnet sind, derart, dass in Rotorblattlängsrichtung zwei aufeinander folgende Vortexgeneratorelemente nicht an derselben der ersten Position oder der zweiten Position angeordnet sind und insbesondere in Rotorblattlängsrichtung abwechselnd auf ein erstes an dritter Position angeordnetes Vortexgeneratorelement ein an erster Position angeordnetes Vortexgeneratorelement und auf ein zweites an dritter Position angeordnetes Vortexgeneratorelement ein an zweiter Position angeordnetes Vortexgeneratorelement folgt.

10. Rotorblatt nach einem der Ansprüche 8 und 9, wobei die Vortexgeneratorelemente eine von der Position an der sie angeordnet sind abhängige Größe aufweisen, wobei die Größe der Vortexgeneratorelemente insbesondere mit zunehmendem relativem Abstand zur Rotorblattvorderkante zunehmend ausgestaltet ist, wobei der relative Abstand zur Rotorblattvorderkante relativ zur Rotorblattprofiltiefe ausgestaltet ist.

11. Rotorblatt nach einem der Ansprüche 8 bis 10, wobei der zweite Abstand mindestens 10 % der Rotorblattprofiltiefe beträgt, und/oder
wobei der erste Abstand mindestens 15 % der Rotorblattprofiltiefe beträgt.

12. Rotorblatt für eine Windenergieanlage, wobei sich das Rotorblatt von einer Rotorblattwurzel zu einer Rotorblattspitze mit einer Rotorblattlänge in Rotorblattlängsrichtung erstreckt, eine sich zwischen einer Rotorblattvorderkante und einer Rotorblatthinterkante in Rotorblattprofiltiefenrichtung erstreckende Rotorblattprofiltiefe aufweist und eine Saugseite und eine Druckseite aufweist, wobei
Vortexgeneratorelemente einer ersten Größe und Vortexgeneratorelemente einer zweiten Größe mit einem Abstand zur Rotorblattvorderkante über wenigstens einen Bereich des Rotorblattes in Rotorblattlängsrichtung angeordnet sind, wobei
in Rotorblattlängsrichtung die Vortexgeneratorelemente der ersten Größe und die Vortexgeneratorelemente der zweiten Größe abwechselnd angeordnet sind, sodass auf ein Vortexgeneratorelement der ersten Größe ein Vortexgeneratorelement der zweiten Größe folgt und auf ein Vortexgeneratorelement der zweiten Größe ein Vortexgeneratorelement der ersten Größe folgt und insbesondere der Abstand zur Rotorblattvorder-kante mindestens 10 % der Rotorblattprofiltiefe beträgt.

13. Rotorblatt nach einem der Ansprüche 8 bis 12, wobei die Vortexgeneratorelemente je ein Paar für eine aerodynamische Wirksamkeit des Vortexgeneratorelements zusammengehörige Vortexgeneratoren auf einer Sockelplatte pro Vortexgeneratorelement umfassen, und/oder wobei
das Rotorblatt senkrecht zur Rotorblattprofiltiefe und senkrecht zur Rotorblattlängsrichtung eine Rotorblattdicke aufweist,
eine relative Dicke das Verhältnis von Rotorblattdicke zu Rotorblattprofiltiefe angibt, und
es sich bei dem Bereich des Rotorblattes um einen Bereich des Rotorblattes handelt, an dem das Rotorblatt eine relative Dicke von mindestens 20 % aufweist.

14. Windenergieanlage umfassend mindestens ein Rotorblatt nach einem der Ansprüche 8 bis 13.

15. Windpark umfassend mehrere Windenergieanlagen nach Anspruch 14.
